# DEMANDE DE BREVET EUROPEEN

(11) **EP 4 024 803 A1**
(43) Date de publication de la demande: **06.07.2022**
(21) Numéro de dépôt: 21218220.8
(22) Date de dépôt: 29.12.2021
(51) Int. Cl.: H04L 27/26

(54) **PROCÉDÉS ET MODULES D ÉMISSION ET DE RÉCEPTION DE TRAMES RADIO DE DURÉE AUGMENTÉE PAR RAPPORT À LA TECHNOLOGIE 5G NR**

(30) Priorité: 30.12.2020 FR 2014266
(71) Demandeur: THALES, 92400 Courbevoie (FR)
(72) Inventeur: PANAITOPOL, Dorin, 92622 GENNEVILLIERS CEDEX (FR); PERON, Jean-Luc, 92622 GENNEVILLIERS CEDEX (FR)
(74) Mandataire: Lavoix

(57) **Abrégé**

Procédé d'émission de trames radio (301) consistant à : pour un espacement Δf quelconque entre sous-porteuses fréquentielles, un nombre déterminé d'échantillons N par symbole OFDM utile et une bande fréquentielle d'émission déterminée, où lesdits espacement Δf, nombre d'échantillons N par symbole OFDM utile et bande fréquentielle d'émission BW sont tels que prescrits par la norme 3GPP 5G NR et définissent une configuration d'émission courante, générer des symboles OFDM utiles ; constitution d'une trame radio dans laquelle chaque symbole OFDM utile est précédé d'un préfixe cyclique répétant une partie dudit symbole OFDM utile. Il se caractérise en ce que le nombre total de symboles OFDM utiles dans un demi-slot radio associé à la trame radio est égal au nombre prescrit par la norme 3GPP 5G NR pour ladite configuration et en ce qu'une durée du demi-slot radio est augmentée de manière à pouvoir accommoder ledit nombre de symboles OFDM utiles tout en augmentant également la taille des préfixes cycliques ajoutés aux symboles OFDM utiles par rapport à la taille des préfixes cycliques prescrites par ladite norme 3GPP 5G NR pour ladite configuration.

## Description

La présente invention concerne le domaine de l'émission et de la réception de signaux radioélectriques composés de trames conformément, au moins partiellement, à la technologie, dite 5G NR (5G New Radio), d'accès radio RAT (« Radio Acess Technology ») développée par le 3GPP («3rd Generation Partnership Project ») pour le réseau mobile 5G.

La présente invention concerne plus spécifiquement un procédé d'émission de trames radio dans un module électronique d'émission radio, comprenant les étapes suivantes : pour un espacement Δf quelconque entre sous-porteuses fréquentielles préalablement sélectionné entre plusieurs espacements, un nombre déterminé d'échantillons N par symbole OFDM utile et une bande fréquentielle d'émission déterminée, où lesdits espacement Δf, nombre d'échantillons N par symbole et bande fréquentielle d'émission BW sont tels que prescrits par la norme 3GPP 5G NR et définissent une configuration d'émission courante, génération de la durée utile d'un symbole OFDM ; constitution d'une trame radio dans laquelle chaque symbole utile est précédé d'un préfixe cyclique, respectivement suivi d'un suffixe cyclique, répétant une partie dudit symbole utile.

Dans les versions de la norme 3GPP 5G NR dite Rel-17, Rel-16 et Rel-15, le préfixe cyclique étendu (« Extended Cyclic Prefix » en Anglais) n'est pas autorisé, notamment pour les configurations 5G NR de 15 et 30 kHz.

Or, si l'écart temporel entre un premier et un dernier multi-trajet du signal dépasse la taille du préfixe cyclique CP, le signal reçu peut présenter une forte interférence inter-symbole et/ou une baisse importante de signal ou du rapport signal sur bruit SNR (« Signal to Noise Ratio »).

Ces perturbations sont particulièrement présentes dans le cas d'applications de diffusion broadcast/multicast et/ou de relayage coopératif (un type de relayage qui utilise plusieurs transmetteurs qui transmettent tous le même flux de données en même temps, plusieurs récepteurs, puis des retransmissions consécutives sur plusieurs bonds, car chaque récepteur qui devient relais peut retransmettre à son tour).

Il est donc nécessaire de trouver une solution qui permette d'augmenter la résistance aux multi-trajets et plus généralement aux imperfections de synchronisation de la trame radio.

A cet effet, suivant un premier aspect, l'invention propose un procédé d'émission de trames radio du type précité caractérisé en ce que le nombre total de symboles utiles dans un demi-slot radio associé à la trame radio est égal au nombre prescrit par la norme 3GPP 5G NR pour ladite configuration et en ce qu'une durée demi-slot radio est augmentée de manière à pouvoir accommoder ledit nombre de symboles utiles tout en augmentant également la taille des préfixes, respectivement des suffixes, cycliques ajoutés aux symboles utiles par rapport à la taille des préfixes, respectivement suffixes, prescrites par ladite norme 3GPP 5G NR pour ladite configuration.

Une trame de signal ainsi générée permet d'augmenter la résistance du signal aux multi-trajets et plus généralement aux imperfections de synchronisation de la trame radio.

L'invention permet ainsi de rendre compatible la couche physique 5G NR avec des applications de type multicast/broadcast, diffusion, diversité coopérative en transmission (e.g. plusieurs transmetteurs transmettent le même flux de données potentiellement en même temps pour enrichir la diversité au niveau d'un récepteur qui reçoit la/les transmissions ; dans une première étape de transmission, les transmetteurs peuvent synchroniser leurs transmissions) et/ou en réception (e.g. plusieurs récepteurs reçoivent le même flux de données potentiellement en même temps, depuis un ou plusieurs transmetteurs, et puis ils s'échangent l'information reçue, potentiellement dans un deuxième temps, pour enrichir la diversité), relayage coopératif (un type de relayage qui utilise plusieurs transmetteurs qui transmettent tous le même flux de données en même temps, plusieurs récepteurs, puis des retransmissions consécutives sur plusieurs bonds, car chaque récepteur qui devient relais peut retransmettre à son tour, potentiellement le même flux de données, potentiellement en même temps qu'un autre ou plusieurs autres relais).

Dans des modes de réalisation, un procédé d'émission de trames radio suivant l'invention comporte en outre une ou plusieurs des caractéristiques suivantes :
- la durée du demi-slot radio est 1.5 fois plus longue que la durée du demi-slot radio prescrite par ladite norme 3GPP 5G NR pour ladite configuration.
- un format de constitution d'un demi-slot radio est sélectionné parmi l'un des formats suivants :
   pour une numérologie de 15 kHz :
      i) demi-slot comportant 5 symboles complets avec CP2_15kHz=33,3(3)µs=256/7.68MHz et Tu=66,6(6)µs=512/7.68MHz, et 2 symboles complets avec CP3_15kHz=58,3(3)µs=448/7.68MHz et Tu=66.6(6)µs=512/7.68MHz ;
      ii) demi-slot comportant 4 symboles complets avec CP3_15kHz=58,3(3)µs=448/7.68MHz et Tu=66.6(6)µs=512/7.68MHz, et 3 symboles avec CP1_15kHz=16,6(6)µs=128/7.68MHz et Tu=66.6(6)µs=512/7.68MHz ;
      iii) demi-slot comportant 1 symbole complet avec CP4_15kHz=41,1458(3)µs=316/7.68MHz et Tu=66.6(6)µs=512/7.68MHz, et 6 symboles complets avec CP5_15kHz=40,36458(3)µs=310/7.68MHz et Tu=66.6(6)µs=512/7.68MHz ;
      iv) demi-slot comportant 1 symbole complet avec CP6_15kHz=42,708(3)µs=328/7.68MHz et Tu=66.6(6)µs=512/7.68MHz, et 6 symboles complets avec CP7_15kHz=40,1041(6)µs=308/7.68MHz et Tu=66.6(6)µs=512/7.68MHz ;
      v) demi-slot comportant 1 symbole complet avec CP8_15kHz=45,8(3)µs=352/7.68MHz et Tu=66.6(6)µs=512/7.68MHz, et 6 symboles complets avec CP9_15kHz=39,58(3)µs=304/7.68MHz et Tu=66.6(6)µs=512/7.68MHz ;
      vi) demi-slot comportant 1 symbole complet avec CP10_15kHz=58,3(3)µs=448/7.68MHz et Tu=66.6(6)µs=512/7.68MHz, et 6 symboles complets avec CP11_15kHz=37,5µs=288/7.68MHz et Tu=66.6(6)µs=512/7.68MHz ;
   pour une numérologie à 30 kHz :
      i) demi-slot comportant 5 symboles avec CP2_30kHz=16,6(6)µs=128/7.68MHz et Tu=33,3(3)µs=256/7.68MHz, et 2 symboles complets avec CP3_30kHz=29,1(6)µs=224/7.68MHz et Tu=33.3(3)µs=256/7.68MHz ;
      ii) demi-slot comportant 4 symboles avec CP3_30kHz=29,1(6)µs=224/7.68MHz et Tu=33.3(3)µs=256/7.68MHz, et 3 symboles complets avec CP1_30kHz=8,3(3)µs=64/7.68MHz et Tu=33,3(3)µs=256/7.68MHz ;
      iii) demi-slot comportant 1 symbole complet avec CP4_30kHz=20,57291(6)µs=158/7.68MHz et Tu=33.3(3)µs=256/7.68MHz, et 6 symboles complets avec CP5_30kHz=20,182291(6)µs=155/7.68MHz et Tu=33.3(3)µs=256/7.68MHz ;
      iv) demi-slot comportant 1 symbole complet avec CP6_30kHz=21,3541(6)µs=164/7.68MHz et Tu=33.3(3)µs, et 6 symboles complets avec CP7_30kHz=20,05208(3)µs=154/7.68MHz et Tu=33.3(3)µs ;
      v) demi-slot comportant 1 symbole complet avec CP8_30kHz=22,91(6)µs=176/7.68MHz et Tu=33.3(3)µs, et 6 symboles complets CP9_30kHz=19,791(6)µs=152/7.68MHz et Tu=33.3(3)µs ;
      vi) demi-slot comportant 1 symbole complet avec CP10_30kHz=29,1(6)µs=224/7.68MHz et Tu=33.3(3)µs, et 6 symboles complets avec CP11_30kHz=18,75µs=144/7.68MHz et Tu=33.3(3)µs ;
   pour une numérologie à 60 kHz :
      i) demi-slot comportant 5 symboles complets avec CP2_60kHz=8,3(3)µs=64/7.68MHz et Tu=16.6(6)µs=128/7.68MHz, et 2 symboles complets CP3_60kHz=14,58(3)µs=112/7.68MHz et Tu=16.66(6)µs=128/7.68MHz ;
      ii) demi-slot comportant 4 symboles complets avec CP3_60kHz=14,58(3)µs=112/7.68MHz et Tu=16.66(6)µs=128/7.68MHz, et 3 symboles complets avec CP1_60kHz=4,1(6)µs=32/7.68MHz et Tu=16.6(6)µs=128/7.68MHz ;
      iv) demi-slot comportant 1 symboles complets avec CP6_60kHz=10,67708(3)µs=82/7.68MHz et Tu=16.66(6)µs=128/7.68MHz, et 6 symboles complets avec CP7_60kHz=10,026041(6)µs=77/7.68MHz et Tu=16.66(6)µs=128/7.68MHz ;
      v) demi-slot comportant 1 symboles complet avec CP8_60kHz=11,458(3)µs=88/7.68MHz et Tu=16.66(6)µs=128/7.68MHz, et 6 symboles complets avec CP9_60kHz=9,8958(3)µs=76/7.68MHz et Tu=16.66(6)µs=128/7.68MHz ;
      vi) demi-slot comportant 1 symboles complet avec CP10_60kHz=14,58(3)µs=112/7.68MHz et Tu=16.66(6)µs=128/7.68MHz, et 6 symboles complets avec CP11_60kHz=9,375µs=72/7.68MHz et Tu=16.66(6)µs=128/7.68MHz ;
   pour une numérologie 7.5 kHz :
      i) demi-slot comportant 5 symboles complet avec CP2_7kHz5=66,6(6)µs=512/7.68MHz et Tu=133,3(3)µs=1024/7.68MHz, et 2 symboles complets avec CP3_7kHz5=116,6(6)µs=896/7.68MHz et Tu 133,3(3)µs=1024/7.68MHz ;
      ii) demi-slot comportant 4 symboles complets avec CP3_7kHz5=116,6(6)µs=896/7.68MHz et Tu=133,3(3)µs=1024/7.68MHz, et 3 symboles complets avec CP1_7kHz5=33,3(3)µs=256/7.68MHz et Tu=133,3(3)µs=1024/7.68MHz ;
      iii) demi-slot comportant 1 symbole complet avec CP4_7kHz5=82,291(6)µs=632/7.68MHz et Tu=133,3(3)µs=1024/7.68MHz, et 6 symboles complets avec CP5_7kHz5=80,7291(6)µs=620/7.68MHz et Tu=133,3(3)µs=1024/7.68MHz ;
      iv) demi-slot comportant 1 symbole complet avec CP6_7kHz5=85,41(6)µs=656/7.68MHz Tu=133.3(3)µs=1024/7.68MHz, et 6 symboles complets avec CP7_7kHz5=80,208(3)µs=616/7.68MHz et Tu=133.3(3)µs ;
      v) demi-slot comportant 1 symbole complet avec CP8_7kHz5=91,6(6)µs=704/7.68MHz et Tu=133.3(3)µs=1024/7.68MHz, et 6 symboles complets avec CP9_7kHz5=79,1(6)µs=608/7.68MHz et Tu=133.3(3)µs=1024/7.68MHz ;
      vi) demi-slot comportant 1 symbole complet avec CP10_7kHz5=116,6(6)µs=896/7.68MHz et Tu=133,3(3)µs=1024/7.68MHz, et 6 symboles complets avec CP11_7kHz5=75µs=576/7.68MHz et Tu=133,3(3)µ3=1024/7.68MHz.

Suivant un deuxième aspect, la présente invention propose un procédé de réception de trames radio dans un module électronique de réception radio, comprenant les étapes suivantes : réception de trames radio comprenant des symboles OFDM précédemment générés conformément à la norme 5G NR et dans laquelle chaque symbole utile est précédé d'un préfixe, respectivement suivi d'un suffixe, cyclique répétant une partie dudit symbole utile ; pour chaque symbole OFDM, détermination d'un symbole OFDM utile en fonction dudit symbole OFDM et de son préfixe, respectivement suffixe ; pour un espacement Δf quelconque entre sous-porteuses fréquentielles préalablement sélectionné entre plusieurs espacements, une fréquence déterminée d'échantillonnage et une bande fréquentielle d'émission déterminée, tels que prescrits par la norme 3GPP 5G NR et définissant une configuration de réception courante, transformation de Fourier inverse desdits symboles OFDM utiles conformément à la norme 3GPP 5G NR, ledit procédé de réception étant caractérisé en ce que le nombre total de symboles utiles dans un demi-slot radio associé à la trame radio est égal au nombre prescrit par la norme 3GPP 5G NR pour ladite configuration et en ce qu'une durée du demi-slot radio est augmentée de manière à pouvoir accommoder ledit nombre de symboles utiles tout en augmentant également la taille des préfixes, respectivement des suffixes, cycliques ajoutés aux symboles utiles par rapport à la taille des préfixes, respectivement des suffixes, prescrites par ladite norme 3GPP 5G NR pour ladite configuration.

Dans des modes de réalisation, un procédé de réception de trames radio suivant l'invention comporte en outre une ou plusieurs des caractéristiques suivantes :
- la durée du demi-slot radio est 1.5 fois plus longue que la durée du demi-slot radio prescrite par ladite norme 3GPP 5G NR pour ladite configuration.
- un format de constitution d'un demi-slot radio est sélectionné parmi l'un des formats suivants :
   pour une numérologie de 15 kHz :
      i) demi-slot comportant 5 symboles complets avec CP2_15kHz=33,3(3)µs=256/7.68MHz et Tu=66,6(6)µs=512/7.68MHz, et 2 symboles complets avec CP3_15kHz=58,3(3)µs=448/7.68MHz et Tu=66.6(6)µs=512/7.68MHz ;
      ii) demi-slot comportant 4 symboles complets avec CP3_15kHz=58,3(3)µs=448/7.68MHz et Tu=66.6(6)µs=512/7.68MHz, et 3 symboles avec CP1_15kHz=16,6(6)µs=128/7.68MHz et Tu=66.6(6)µs=512/7.68MHz ;
      iii) demi-slot comportant 1 symbole complet avec CP4_15kHz=41,1458(3)µs=316/7.68MHz et Tu=66.6(6)µs=512/7.68MHz, et 6 symboles complets avec CP5_15kHz=40,36458(3)µs=310/7.68MHz et Tu=66.6(6)µs=512/7.68MHz ;
      iv) demi-slot comportant 1 symbole complet avec CP6_15kHz=42,708(3)µs=328/7.68MHz et Tu=66.6(6)µs=512/7.68MHz, et 6 symboles complets avec CP7_15kHz=40,1041(6)µs=308/7.68MHz et Tu=66.6(6)µs=512/7.68MHz ;
      v) demi-slot comportant 1 symbole complet avec CP8_15kHz=45,8(3)µs=352/7.68MHz et Tu=66.6(6)µs=512/7.68MHz, et 6 symboles complets avec CP9_15kHz=39,58(3)µs=304/7.68MHz et Tu=66.6(6)µs=512/7.68MHz ;
      vi) demi-slot comportant 1 symbole complet avec CP10_15kHz=58,3(3)µs=448/7.68MHz et Tu=66.6(6)µs=512/7.68MHz, et 6 symboles complets avec CP11_15kHz=37,5µs=288/7.68MHz et Tu=66.6(6)µs=512/7.68MHz ;
   pour une numérologie à 30 kHz :
      i) demi-slot comportant 5 symboles avec CP2_30kHz=16,6(6)µs=128/7.68MHz et Tu=33,3(3)µs=256/7.68MHz, et 2 symboles complets avec CP3_30kHz=29,1(6)µs=224/7.68MHz et Tu=33.3(3)µs=256/7.68MHz ;
      ii) demi-slot comportant 4 symboles avec CP3_30kHz=29,1(6)µs=224/7.68MHz et Tu=33.3(3)µs=256/7.68MHz, et 3 symboles complets avec CP1_30kHz=8,3(3)µs=64/7.68MHz et Tu=33,3(3)µs=256/7.68MHz ;
      iii) demi-slot comportant 1 symbole complet avec CP4_30kHz=20,57291(6)µs=158/7.68MHz et Tu=33.3(3)µs=256/7.68MHz, et 6 symboles complets avec CP5_30kHz=20,182291 (6)µs=155/7.68MHz et Tu=33.3(3)µs=256/7.68MHz ;
      iv) demi-slot comportant 1 symbole complet avec CP6_30kHz=21,3541(6)µs=164/7.68MHz et Tu=33.3(3)µs, et 6 symboles complets avec CP7_30kHz=20,05208(3)µs=154/7.68MHz et Tu=33.3(3)µs ;
      v) demi-slot comportant 1 symbole complet avec CP8_30kHz=22,91(6)µs=176/7.68MHz et Tu=33.3(3)µs, et 6 symboles complets CP9_30kHz=19,791(6)µs=152/7.68MHz et Tu=33.3(3)µs ;
      vi) demi-slot comportant 1 symbole complet avec CP10_30kHz=29,1(6)µs=224/7.68MHz et Tu=33.3(3)µs, et 6 symboles complets avec CP11_30kHz=18,75µs=144/7.68MHz et Tu=33.3(3)µs ;
   pour une numérologie à 60 kHz :
      i) demi-slot comportant 5 symboles complets avec CP2_60kHz=8,3(3)µs=64/7.68MHz et Tu=16.6(6)µs=128/7.68MHz, et 2 symboles complets CP3_60kHz=14,58(3)µs=112/7.68MHz et Tu=16.66(6)µs=128/7.68MHz ;
      ii) demi-slot comportant 4 symboles complets avec CP3_60kHz=14,58(3)µs=112/7.68MHz et Tu=16.66(6)µs=128/7.68MHz, et 3 symboles complets avec CP1_60kHz=4,1(6)µs=32/7.68MHz et Tu=16.6(6)µs=128/7.68MHz ;
      iv) demi-slot comportant 1 symboles complet avec CP6_60kHz=10,67708(3)µs=82/7.68MHz et Tu=16.66(6)µs=128/7.68MHz, et 6 symboles complets avec CP7_60kHz=10,026041 (6)µs=77/7.68MHz et Tu=16.66(6)µs=128/7.68MHz ;
      v) demi-slot comportant 1 symboles complet avec CP8_60kHz=11,458(3)µs=88/7.68MHz et Tu=16.66(6)µs=128/7.68MHz, et 6 symboles complets avec CP9_60kHz=9,8958(3)µs=76/7.68MHz et Tu=16.66(6)µs=128/7.68MHz ;
      vi) demi-slot comportant 1 symboles complet avec CP10_60kHz=14,58(3)µs=112/7.68MHz et Tu=16.66(6)µs=128/7.68MHz, et 6 symboles complets avec CP11_60kHz=9,375µs=72/7.68MHz et Tu=16.66(6)µs=128/7.68MHz ;
   pour une numérologie 7.5 kHz :
      i) demi-slot comportant 5 symboles complets avec CP2_7kHz5=66,6(6)µs=512/7.68MHz et Tu=133,3(3)µs=1024/7.68MHz, et 2 symboles complets avec CP3_7kHz5=116,6(6)µs=896/7.68MHz et Tu 133,3(3)µs=1024/7.68MHz ;
      ii) demi-slot comportant 4 symboles complets avec CP3_7kHz5=116,6(6)µs=896/7.68MHz et Tu=133,3(3)µs=1024/7.68MHz, et 3 symboles complets avec CP1_7kHz5=33,3(3)µs=256/7.68MHz et Tu=133,3(3)µs=1024/7.68MHz ;
      iii) demi-slot comportant 1 symbole complet avec CP4_7kHz5=82,291 (6)µs=632/7.68MHz et Tu=133,3(3)µs=1024/7.68MHz, et 6 symboles complets avec CP5_7kHz5=80,7291(6)µs=620/7.68MHz et Tu=133,3(3)µs=1024/7.68MHz ;
      iv) demi-slot comportant 1 symbole complet avec CP6_7kHz5=85,41(6)µs=656/7.68MHz Tu=133.3(3)µs=1024/7.68MHz, et 6 symboles complets avec CP7_7kHz5=80,208(3)µs=616/7.68MHz et Tu=133.3(3)µs ;
      v) demi-slot comportant 1 symbole complet avec CP8_7kHz5=91,6(6)µs=704/7.68MHz et Tu=133.3(3)µs=1024/7.68MHz, et 6 symboles complets avec CP9_7kHz5=79,1(6)µs=608/7.68MHz et Tu=133.3(3)µs=1024/7.68MHz ;
      vi) demi-slot comportant 1 symbole complet avec CP10_7kHz5=116,6(6)µs=896/7.68MHz et Tu=133,3(3)µs=1024/7.68MHz, et 6 symboles complets avec CP11_7kHz5=75µs=576/7.68MHz et Tu=133,3(3)µ3=1024/7.68MHz.

Suivant un troisième aspect, la présente invention propose un module d'émission de trames radio adapté pour la mise en œuvre du procédé d'émission précédent.

De préférence, le module d'émission de trames radio est adapté pour mettre en œuvre la norme 3GPP 5G NR, le module d'émission fonctionnant avantageusement soit dans un premier mode opérationnel dans lequel il fonctionne selon un procédé d'émission conforme à la norme 3GPP 5G NR, soit dans un second mode opérationnel dans lequel il fonctionne selon le procédé d'émission précédent.

Suivant un quatrième aspect, la présente invention propose un module de réception de trames radio adapté pour la mise en œuvre d'un procédé de réception précédent.

De préférence, le module de réception de trames radio est adapté pour mettre en œuvre la norme 3GPP 5G NR, le module de réception fonctionnant avantageusement soit dans un premier mode opérationnel dans lequel il fonctionne selon un procédé de réception conforme à la norme 3GPP 5G NR, soit dans un second mode opérationnel dans lequel il fonctionne selon le procédé de réception précédent.

Suivant un cinquième aspect, la présente invention propose une trame radio résultant de la mise en œuvre du procédé d'émission précédent.

Ces caractéristiques et avantages de l'invention apparaîtront à la lecture de la description qui va suivre, donnée uniquement à titre d'exemple, et faite en référence aux dessins annexés, sur lesquels :
- la figure 1 représente une vue schématique d'un réseau de télécommunication dans un mode de réalisation de l'invention ;
- la figure 2 est un organigramme d'étapes mises en œuvre dans un mode de réalisation de l'invention ;
- la figure 3 illustre la structure du demi-slot 5G NR pour un espacement de 15 kHz dans un mode de réalisation de l'invention ;
- la figure 4 illustre une modification du demi-slot (et implicitement une modification de la trame) pour un espacement de 15 kHz dans un mode de réalisation de l'invention ;
- la figure 5 illustre la structure du demi-slot 5G NR pour un espacement de 30 kHz dans un mode de réalisation de l'invention ;
- la figure 6 illustre une modification du demi-slot (et implicitement une modification de la trame) pour un espacement de 30 kHz dans un mode de réalisation de l'invention ;
- la figure 7 illustre la structure du demi-slot 5G NR pour un espacement de 7,5 kHz dans un mode de réalisation de l'invention ;
- la figure 8 illustre une modification du demi-slot (et implicitement une modification de la trame) pour un espacement de 7,5 kHz dans un mode de réalisation de l'invention ; et,
- la figure 9 illustre une modification du demi-slot (et implicitement une modification de la trame) pour un espacement de 7,5 kHz dans un mode de réalisation de l'invention.

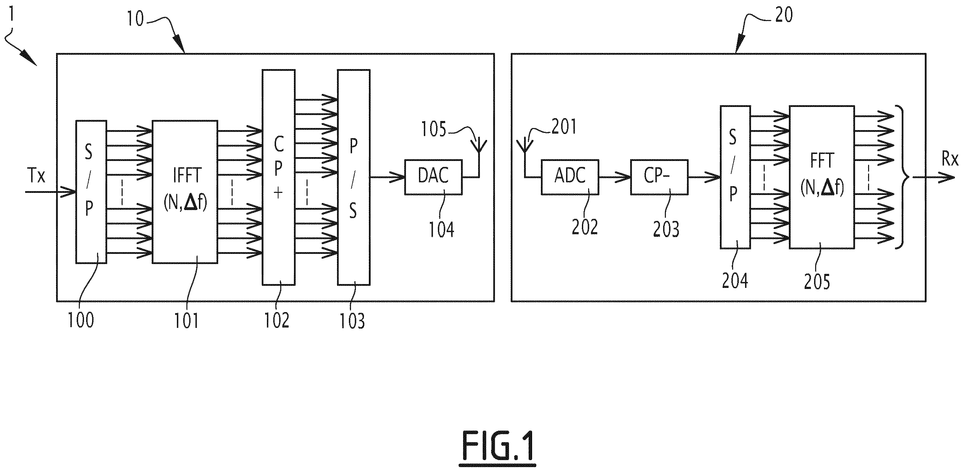

La figure 1 représente schématiquement un réseau de radiocommunication 1 dans un mode de réalisation de l'invention, comprenant des modules d'émission radio 10 et des modules de réception radio 20 (un unique exemplaire de chacun de ces modules est représenté en figure 1).

De tels modules font partie de nœuds de communication tels que des stations de base radio ou des terminaux utilisateurs de radiocommunication du réseau 1. Ces nœuds radios comportent en outre, de façon connue, un ensemble d'applications logicielles et de modules de traitement pour produire un flux Tx de données à émettre par voie radio par le module d'émission radio 10 (respectivement pour traiter un flux Rx de données reçues par voie radio par le module de réception radio 20).

Dans un mode de réalisation, le module d'émission radio 10 et le module de réception radio 20 sont adaptés pour mettre en œuvre, dans un premier mode opérationnel (mode 1), le protocole d'accès radio 5G NR tel que spécifié par 3GPP, par exemple conformément aux spécifications 5G 3GPP d'une station de base gNB Rel-15, e.g. TS 38.104 et les spécifications 5G 3GPP d'un équipement utilisateur UE Rel-15, e.g. TS 38.101-1 et/ou TS 38.101-2 et les spécifications 5G 3GPP pour la couche PHY Rel-15, i.e. TS 38.211, et dans un deuxième mode opérationnel (mode 2), pour mettre en œuvre le protocole tel que modifié selon l'invention.

La figure 1 est une illustration simplifiée d'un exemple typique d'un transmetteur et d'un récepteur 5G NR, représentant ainsi une chaîne de communication radio dans le sens descendant (« DownLink, DL, i.e. une communication depuis une station de base vers le mobile/User Equipment) et/ou dans le sens montant (« UpLink », UL, i.e. communication depuis le mobile/User Equipment vers la station de base) (si modulation OFDM simple, sans précodage), ou encore de type SideLink (communication depuis un mobile/User Equipment vers un autre mobile/User Equipment, par exemple communication « Device-to-Device », D2D, ou communication « Vehicle-to-Everything », V2X ou « Vehicle-to-Vehicle », V2V, ou pour des services spécifiques comme Proximity Services ou ProSe).

On notera que dans le sens UL, d'autres modulations peuvent être utilisées que celle décrite ici, notamment le DFT-s-OFDM (avec précodage). L'invention peut bien sûr être mise en œuvre pour de telles autres modulations.

Plus spécifiquement, la figure 1 représente la transmission et la réception d'un symbole OFDM. Les symboles se succèdent, et pour chaque symbole, le traitement représenté par la figure 1 est mis en œuvre. L'invention est mise en œuvre par exemple dans la plage de fréquence FR1 (des fréquences porteuses inférieures à 6 GHz ou 7.125 GHz) pour la mise en œuvre du protocole d'accès radio 5G NR, ou dans un autre exemple dans la plage de fréquence FR2 (des fréquences porteuses supérieure à 6 GHz ou 7.125 GHz. Il est à noter que la configuration de 60 kHz peut fonctionner aussi dans la plage de fréquence FR2.

Dans d'autres modes de réalisation, seul le mode 2 (et pas le mode 1) est mis en œuvre par le module d'émission 10 ou par le module de réception 20.

Le module d'émission 10, en référence à la figure 1, comporte un convertisseur série/parallèle 100, un bloc de transformation de Fourier inverse 101, un bloc d'ajout de préfixe cyclique 102, un convertisseur parallèle/série 103, un convertisseur numérique/analogique 104 et une antenne radioélectrique 105.

Le fonctionnement dans les deux modes opérationnels est le même dans la constitution de la durée utile des symboles OFDM (en anglais, « useful symbol duration »).

Il diffère ensuite dans la longueur (considérée en temps et nombre d'échantillons par préfixe) des préfixes cycliques générés, qui est augmentée dans le mode 2, par rapport à la norme 5G NR (c'est-à-dire par rapport au mode 1).

Il diffère aussi dans la durée d'un slot. Selon la présente invention le nombre de symboles OFDM insérés dans un slot du mode 2 est identique au nombre de symboles OFDM insérés dans une trame du mode 1, de sorte que la durée d'un slot en mode 2 est supérieure à la durée du slot en mode 1, les symboles étant plus long.

Ainsi, si la durée d'un slot en mode 1 vaut 1 ms, la durée du slot en mode 2 est choisie égale à 1.5 ms, et si la durée d'un slot en mode 1 vaut 0.5 ms, la durée du slot en mode 2 est choisie égale à 0.75 ms. Si la durée d'une trame (contenant plusieurs slots) en mode 1 vaut 10 ms, la durée d'une trame en mode 2 (contenant le même nombre de slots que pour le mode 1) est choisie égale à 15 ms. De la sorte, dans un intervalle de 30 ms, on émet/reçoit trois trames en mode 1 et deux trames en mode 2 et l'on conserve une certaine correspondance/synchronisation entre les deux modes de nature à ne pas modifier les couches supérieures comme les couches L2/L3, e.g. la couche/la sous-couche MAC (L2).

De manière précise, dans le mode 1 (selon la définition exacte 3GPP pour la norme 5G NR):
- 1 slot est égal 14 symboles complets. Cela veut dire que la durée d'un slot varie avec la numérologie : pour une numérologie de 15 kHz, un slot a une durée de 1ms ; pour une numérologie de 30 kHz, un slot a une durée de 0.5ms ; pour une numérologie de 60 kHz, un slot a une durée de 0.25 ms, etc.
- 1 sous-trame (« sub-frame) a une durée fixe de 1ms.
- 1 trame (« frame ») a une durée fixe de 10ms.

Et de préférence pour le mode 2 on a :
- 1 slot est égal à 14 symboles complets, mais les symboles complets sont plus longs: pour une numérologie de 15 kHz, un slot a une durée de 1.5 ms ; pour une numérologie de 30 kHz, un slot a une durée de 0.75ms ; pour une numérologie de 60 kHz, un slot a une durée de 0.375 ms, etc.
- 1 sous-trame (« sub-frame) a une durée fixe de 1.5ms.
- 1 trame (« frame ») a une durée fixe de 15ms.

L'avantage principal est que le mode 2 utilise pour un slot (ou un demi-slot) le même nombre de symboles OFDM que le mode 1, et on peut donc utiliser pour l'allocation de ressources les mêmes tailles de paquets (i.e. le même TBS ou « Transport Block Size » en anglais) en provenance de la couche MAC ou vers la couche MAC en fonction du sens de communication et si l'équipement qui implémente la procédure représente un utilisateur mobile ou une station de base. En plus, le mode 2 ne change pas la taille utile des symboles OFDM.

Le comportement des blocs 102, 103 diffère donc suivant les modes opérationnels, les autres blocs du module d'émission radio 10 ayant le même comportement dans les premier et deuxième modes opérationnels dans le mode de réalisation ici considéré, comportement conforme aux spécifications 3GPP 5G NR.

De façon connue, plusieurs valeurs d'espacements Δf entre sous-porteuses (en anglais « SubCarrier Spacing », encore libellé SCS) sont sélectionnables selon 5G NR, correspondant à des durées de symboles utiles et des durées de préfixes respectifs fixées par la norme 3GPP et correspondant donc au mode opérationnel 1 :

**Tableau 1 : durées - mode opérationnel 1**

| Numérologie (µ) | 0 | 1 | 2 | 3 | 4 |
|---|---|---|---|---|---|
| Δf (kHz) | 15 | 30 | 60 | 120 | 240 |
| Durée utile symbole OFDM (µs) | 66.67 | 33.33 | 16.67 | 8.33 | 4.17 |
| Durée préfixe cyclique (CP) (µs) | 4.69 | 2.34 | 1.17 | 0.57 | 0.29 |
| Symbole OFDM incluant CP (µs) | 71.35 | 35.68 | 17.84 | 8.92 | 4.46 |

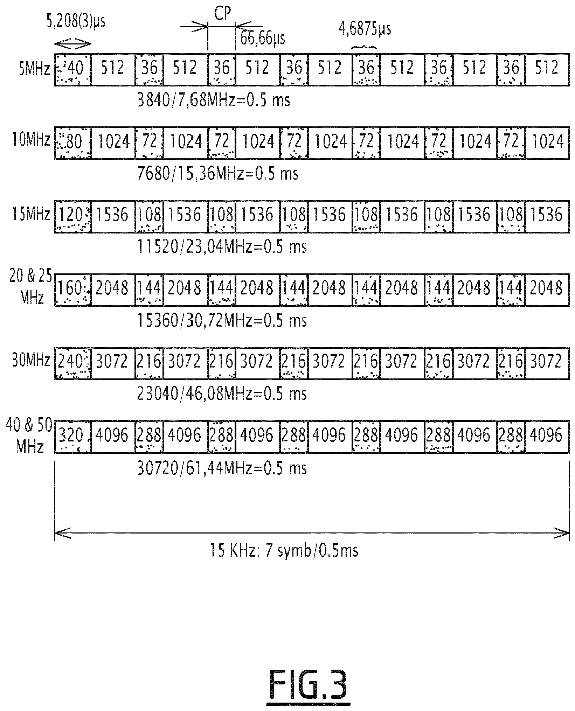

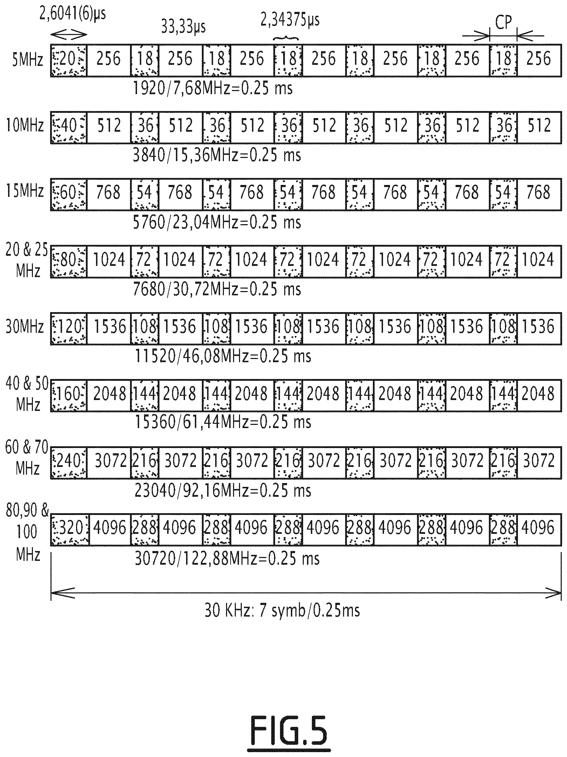

Il est à noter que la durée du CP indiquée dans le tableau 1 (pour le mode opérationnel 1) n'est pas valable pour le premier symbole OFDM du demi-slot qui a un CP un peu plus long de manière à obtenir une durée prédéfinie pour le demi-slot (e.g. de 0.5 ou 0.25 ms voir par exemple les configurations des Fig. 3 et 5. pour les numérologies 0 et 1, pour les espacements Δf entre sous-porteuses de 15 et 30 kHz).

Dans le mode opérationnel 2, différentes valeurs d'espacements Δf entre sous-porteuses (en anglais « Subcarrier Spacing ») sont également sélectionnables correspondant à des durées utiles de symboles identiques à celles indiquées dans le tableau 1, et à des durées de préfixes respectifs explicitées plus bas.

Le convertisseur série/parallèle 100 est adapté pour recevoir un flux Tx de symboles numériques en série, par exemple issus de modulation numérique de type BPSK, pi/2 BPSK, QPSK, QAM (e.g. 16QAM, 64QAM, 256QAM, etc.)... en provenance des couches supérieures du modèle OSI (High-PHY, MAC, RLC, etc.) et pour délivrer un flux de symboles numériques en parallèle sur les entrées du bloc de transformation de Fourier inverse 101.

Le bloc de transformation de Fourier inverse 101 (bloc IFFT ou IDFT 101 : IFFT si transformée Fourier inverse rapide, IDFT si transformée Fourier inverse discrète) est adapté pour effectuer une transformation de Fourier inverse sur le vecteur de symboles qui lui est ainsi fourni en entrée.

La taille N de la transformation de Fourrier inverse appliquée est fixée par la norme 3GPP 5G NR et est fonction de l'espacement entre sous-porteuses sélectionné et de la bande de fréquence sélectionnée parmi 5, 10, 15, 20, 25, 30, 40, 50, 60, 70, 80, 90, 100 MHz, par exemple N = 512 pour la bande 5 MHz et l'espacement 15 kHz, N = 1024 pour la bande 10 MHz et l'espacement 15 kHz, N = 256 pour la bande 5 MHz et l'espacement 30 kHz, etc. comme le rappelle le tableau 2 plus bas.

Dans le mode de réalisation considéré, dans les deux modes opérationnels, pour un espacement Δf, la durée utile du symbole OFDM est Tu=1/Af.

Pour la configuration Δf =15 kHz et la durée utile du symbole OFDM est Tu=1/Δf=66,6(6) µs (ou 66,67 µs par approximation), si on utilise une taille IFFT/FFT N=4096, cela veut dire que suite au changement d'espacement, où e.g. Δf devient égale à 30 kHz, la durée utile du symbole OFDM devient Tu=1/Δf=33,3(3) µs (ou 33,33 µs par approximation) et une taille IFFT/FFT égale à N/2=2048 est utilisée.

Pour les deux configurations 15 et 30 kHz, pour une même bande de fréquences (e.g. 10 MHz), la fréquence d'échantillonnage reste la même. Par contre, pour deux bandes de fréquences différentes (e.g. 10 MHz et 20 MHz), la fréquence d'échantillonnage peut changer (e.g. entre deux configurations de bande différentes).

Le bloc IFFT 101 est adapté pour fournir en sortie la partie utile du symbole OFDM (ou symbole OFDM utile), qui est alors délivré au bloc d'ajout de préfixe cyclique 102 (bloc CP+ 102) pour former le symbole OFDM complet. Le symbole OFDM se compose donc d'un préfixe cyclique de durée CP (ou T_{CP}) et d'une partie utile (symbole OFDM utile) de durée Tu.

Le bloc CP+ 102 est adapté pour déterminer pour chaque symbole utile son préfixe cyclique en recopiant au début du symbole utile, une partie du symbole utile (de préférence la portion de fin du symbole utile). La taille de la portion de fin ainsi recopiée dépend du mode opérationnel 1 ou 2 sélectionné, de l'espacement Δf sélectionné et de la bande de fréquence. Des exemples seront donnés plus bas.

Le bloc CP+ 102 est adapté, dans le mode opérationnel 1, pour appliquer strictement les spécifications 3GPP 5G NR, et ,dans le mode opérationnel 2, pour maximiser/élargir la durée du préfixe cyclique OFDM de la spécification 3GPP 5G NR, pour les différentes numérologies (15, 30 kHz, ...) et configurations (5, 10, 15, 20, 25, 30, 40, 50, 60, 70, 80, 90, 100 MHz) de bande de fréquence FR1 (<7.125 GHz) (ou FR2>7.125 GHz pour une numérologie supérieure ou égale à 60 kHz), et les différentes fréquences d'échantillonnage, mais sans modification de la durée du symbole OFDM utile ou de sa taille et sans varier la fréquence d'échantillonnage par rapport aux spécifications de la norme.

Cela permet d'utiliser les mêmes tailles IFFT/FFT que les configurations 3GPP 5G NR et limite ainsi la complexité en termes d'architecture et d'implémentation du transmetteur/récepteur.

Le convertisseur parallèle/série 103 est adapté pour disposer en série (ou en domaine temporel) les échantillons qui constituent un symbole OFDM (à la sortie 103, on a un seul symbole OFDM à la fois), et chaque symbole OFDM est composé du préfixe cyclique du symbole OFDM déterminé par le bloc CP+ suivi de la partie utile dudit symbole OFDM.

Le module d'émission radio 10 est adapté pour constituer une trame comportant une suite de symboles OFDM.

Dans le premier mode opérationnel (mode 1), cette trame est de 10 ms, tandis que dans le second mode opérationnel (mode 2), cette trame est de 15 ms.

Quel que soit le mode opérationnel, le nombre des symboles OFDM inséré par trame par le module d'émission radio 10 dépend de l'espacement Δf, de la bande de fréquence et est fixé par 3GPP 5G NR. Le nombre de symboles pour le mode opérationnel 2 est strictement égal à celui spécifié par la norme pour la même configuration d'espacement Δf et de bande de fréquence (c'est-à-dire le nombre de symboles pour le mode 1).

On peut utiliser le module d'émission 10 dans des modes de fonctionnement différents, e.g. en mode série (le module d'émission 10 génère les symboles un par un, et le traitement s'effectue alors symbole par symbole) ou en mode parallèle (plusieurs symboles sont générés par plusieurs modules d'émission 10, en même temps si besoin, et puis ajoutés (additionnés) sur la trame radio, après l'ajout du CP correspondant). Cela peut arriver par exemple si on souhaite faire un mélange de numérologies, et/ou un mélange des symboles avec des CP différents, et/ou si le temps nécessaire pour moduler le symbole OFDM (et/ou le codage nécessaire) est plus long que la durée du symbole.

Le convertisseur numérique/analogique 104 est adapté pour convertir les trames numériques ainsi obtenus avec une fréquence d'échantillonnage Fq_Ech spécifique (e.g. définie par le Tableau 2) en signal analogique, et pour fournir le signal ainsi généré à l'antenne radioélectrique 105 pour émission radiofréquence.

Le module de réception radio 20 comporte une antenne radioélectrique 201, convertisseur analogique/numérique 202, un bloc de retrait de préfixe cyclique 203, un convertisseur série/parallèle 204 et un bloc de transformation de Fourier 205.

Le fonctionnement dans les deux modes opérationnels des blocs 204 et 205 est le même et est conforme aux spécifications de la norme 3GPP 5G NR.

L'antenne 201 est adaptée pour recevoir le signal émis depuis un module d'émission 10 et pour fournir le signal analogique électrique résultant au convertisseur analogique/numérique 202.

Le convertisseur analogique/numérique 202 est adapté pour numériser le signal reçu et générer des échantillons. Chaque symbole OFDM est donc converti en échantillons, dont le nombre est fonction de Δf et de la bande de fréquence. Ces échantillons sont fournis au bloc de retrait de préfixe cyclique 203 II n'y a pas de changement de taille N pour le symbole utile, ou de fréquence d'échantillonnage, entre les modes opérationnels 1 et 2 : Tu et N restent les mêmes entre le mode 1 et le mode 2 pour une même numérologie et une même bande de fréquence (seul le CP change).

Le bloc de retrait de préfixe cyclique 203, bloc CP- 203, est adapté pour retirer du symbole OFDM le préfixe cyclique. La taille/la durée du préfixe à retirer est fonction du mode opérationnel 1 ou 2 et donc est adapté pour extraire un par un les symboles OFDM utiles de chaque trame de 10 ms en mode 1 et de chaque trame de 15 ms en mode 2.

Il est donc nécessaire, côté récepteur, et de façon synchronisée avec l'émetteur, de connaître la taille d'un CP, son positionnement, la structure de la trame et la durée de la trame (surtout si la structure change d'une trame, d'une sous-trame, ou d'un slot ou demi-slot à un(e) autre).

Plusieurs méthodes sont utilisables pour ce faire :
- les configurations (et leur périodicités) sont connues d'avance (e.g. en utilisant par exemple une pré-configuration semi-statique, périodique ou semi-périodique ; une fois que le récepteur récupère partiellement la synchronisation ou identifie une partie de la périodicité qui et utilisée, le récepteur peut déterminer la structure et la taille de la trame ou la structure et la taille de plusieurs trames);
- le module d'émission indique dans un canal de contrôle (canal de broadcast comme par exemple PBCH (L1, canal broadcast physique) ou BCCH (L2, canal broadcast logique) ou BCH (« Broadcast Channel », canal transport), canal de paging PCCH (« Paging Control Channel », canal logique) ou PCH (« Paging Channel », canal de transport), DL-SCH (DownLink Shared Channel) ou UL-SCH (UpLink Shared Channel), DCI ou UCI (« DownLink/UpLink Control Information »), et/ou bloc de synchronisation SSB - « Synchronisation Signal and PBCH Block » (ou SS/PBCH), et/ou des canaux équivalents SideLink, et/ou information système type MIB - « Master Information Block », «System Information Block 1 » ou SIB1, SIB2, « Control Resource Set » CORESET, CORESET#0, ou autre comme signalisation L2 MAC CE (« Control Element »), ou L3 RRC (« Radio Resource Control »), etc.) la structure et/ou la taille de la trame et/ou la numérologie ;
- le module de réception estime lui-même la durée du CP (et détermine la numérologie) ; il suffit d'une (ou plusieurs) corrélations avec, par exemple, le symbole/les symboles reçus sur le slot/les slots/la trame/les trames reçus pour déterminer la taille du CP et la durée d'un symbole, et/ou éventuellement à l'aide d'une synchronisation sur des canaux type PSS/SSS ou S-PSS/S-SSS (« Primary Synchronization Signal »/ « Secondary Synchronization Signal » ou « Sidelink Primary Synchronization Signal »/ « Sidelink Secondary Synchronization Signal ») et/ou la bande de fréquence/la longueur/la durée et/ou la périodicité et/ou la structure en temps et fréquence de certains pilotes (e.g. comme PSS, SSS, DM-RS ou « Démodulation Reference Signal », CSI-RS ou « Chanel State Information Reference Signal », SRS ou « Sounding Reference Signal », PT-RS ou «Phase Tracking Reference Signal » etc., ou d'autres types de canaux équivalents SideLink) car certaines séquences ont des configurations spécifiques qui sont connues d'avance.

La partie utile du symbole OFDM est ensuite fournie au convertisseur série/parallèle 204 qui créé un vecteur composé de taille N constitué des échantillons provenant de la partie utile du symbole OFDM de durée Tu.

Chaque échantillon (parmi les N reçus) correspond à une entrée dans le bloc FFT 205. La FFT est calculée sur un symbole OFDM utile (sans préfixe cyclique). La taille du vecteur composé est (équivalente à la taille d')un symbole utile exprimé(e) en échantillons.

Le bloc de transformation de Fourier 205, bloc FFT ou DFT (FFT si transformé Fourier directe rapide, ou DFT si transformé Fourier discrète) est adapté pour appliquer une transformation de Fourier au vecteur d'échantillons (correspondant à la durée utile d'un symbole OFDM) qui lui est fourni en entrée, de même taille N que celle ayant produit le symbole utile OFDM fourni.

En sortie du bloc FFT 205 est ainsi délivré un flux de symboles OFDM Rx. Après traitement par les couches OSI supérieures (High-PHY, MAC, RLC etc..), ce flux de symboles sera ensuite utilisé dans les applications du nœud de radiocommunication dont fait partie le module de réception 20.

Dans le tableau 2 ci-dessous sont indiquées les tailles N de FFT/IFFT (et donc le nombre des échantillons par partie utile du symbole OFDM), les fréquences d'échantillonnage Fq_Ech (exprimées en [Méga échantillons par seconde] ou « Mega Samples per second » ou MSps) en fonction des espacements Δf et des bandes de fréquences, valables pour les modes opérationnels 1 et 2, dans le mode de réalisation considéré.

**Tableau 2 : taille FFT/IFFT, fréquence d'échantillonnage**

| | **5 MHz** | **10 MHz** | **15 MHz** | **20 MHz** | **25 MHz** | **30 MHz** | **40 MHz** | **50 MHz** | **60 MHz** | **70 MHz** | **80 MHz** | **90 MHz** | **100 MHz** |
|---|---|---|---|---|---|---|---|---|---|---|---|---|---|
| **15 kHz** | | | | | | | | | | | | | |
| N (FFT) | 512 | 1024 | 1536 | 2048 | 2048 | 3072 | 4096 | 4096 | N/A (>4096 | N/A (>4096 | N/A (>4096 | N/A (>4096 | N/A (>4096 |
| Fq_Ech | 7,68 MSps | 15,36 MSps | 23,04 MSps | 30,72 MSps | 30,72 MSps | 46.08 MSps | 61,44 MSps | 61,44 MSps | FFT) | FFT) | FFT) | FFT) | FFT) |
| **30 kHz** | | | | | | | | | | | | | |
| N (FFT) | 256 | 512 | 768 | 1024 | 1024 | 1536 | 2048 | 2048 | 3072 | 3072 | 4096 | 4096 | 4096 |
| Fq_Ech | 7,68 MSps | 15,36 MSps | 23,04 MSps | 30,72 MSps | 30,72 MSps | 46,08 MSps | 61,44 MSps | 61,44 MSps | 92.16 MSps | 92.16 MSps | 122,88 MSps | 122,88 MSps | 122,88 MSps |
| **60 kHz** | | | | | | | | | | | | | |
| N (FFT) | N/A (<11 | 256 | 384 | 512 | 512 | 768 | 1024 | 1024 | 1536 | 1536 | 2048 | 2048 | 2048 |
| Fq_Ech | RBs) | 15,36 MSps | 23,04 MSps | 30,72 MSps | 30,72 MSps | 46,08 MSps | 61,44 MSps | 61,44 MSps | 92,16 MSps | 92,16 MSps | 122,88 MSps | 122,88 MSps | 122,88 MSps |

Le mode opérationnel 2 reste seulement en partie compatible avec la définition de la forme d'onde 5G NR normée : il s'agit d'une modification pour pouvoir supporter les retards supplémentaires, les pertes de synchronisation et les multi-trajets dans un environnement de propagation complexe avec des écarts de propagation entre les multi-trajets supérieurs à e.g. 5 µs pour une configuration de 15 kHz ou e.g. 2,5 µs pour une configuration de 30 kHz. Le mode opérationnel 2 peut compenser aussi les erreurs de synchronisation entre plusieurs transmetteurs qui partagent le même flux de données, éventuellement codage et/ou MCS (en Anglais « Modulation and Coding Scheme ») pour des modes de diversité coopérative en utilisant des techniques de relayage coopératif par exemple.

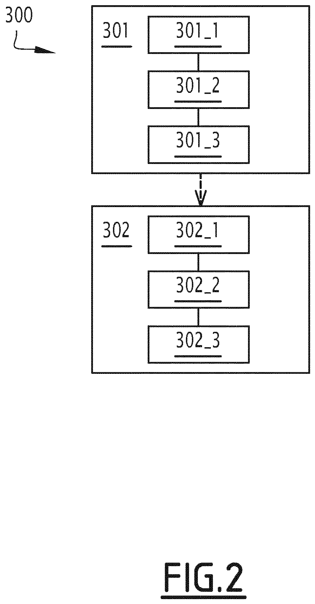

La figure 2 représente un ensemble 300 d'étapes mises en œuvre selon l'invention dans un mode de réalisation comprenant un sous-ensemble d'étapes d'émission 301 et un sous-ensemble d'étapes de réception 302.

Dans un mode de réalisation, le module d'émission 10, respectivement le module de réception 20, comprend un processeur et une mémoire (non représentés). La mémoire comprend des instructions logicielles, qui lorsqu'elles sont exécutées sur le processeur, mettent en œuvre automatiquement certaines au moins des étapes incombant au module d'émission 10, respectivement au module de réception 20 décrites en référence à la figure 2.

Dans le module d'émission 10 sont mises en œuvre les étapes suivantes :
dans une étape 301_1 :
   - le convertisseur série/parallèle 100 reçoit un flux Tx de symboles numériques en série et délivre un vecteur de symboles appliqué aux entrées parallèles du bloc IFFT 101 ;
   - le vecteur de symboles correspond au nombre de sous-porteuses utilisables fixée par la norme 3GPP 5G NR en fonction de l'espacement entre sous-porteuses sélectionné et de la bande de fréquence sélectionnée, et qui est inférieur à la taille N fixée par la norme 3GPP 5G NR pour la taille IFFT. Le vecteur des symboles est par la suite enrichi avec des (valeurs de) zéros pour attendre la taille N (et qui est en général un nombre entier puissance de 2 pour réduire la complexité de calcul IFFT) nécessaire pour le bloc IFFT 101. La taille N est également fixée par la norme 3GPP 5G NR en fonction de l'espacement entre sous-porteuses sélectionné et de la bande de fréquence sélectionnée. L'ajout de zéros correspond à injecter de sous-porteuses nulles aux extrêmes de la bande de fréquence (méthode qui est nécessaire pour respecter les limites imposées par la norme, le gabarit spectral, ou pour diminuer l'interférence avec les bandes adjacentes) ou au milieu de la bande (autour de la composante DC ou directement sur la sous-porteuse DC, méthode qui est nécessaire parfois pour éviter une fuite directe du signal de l'oscillateur local, pour éviter les distorsions pour les récepteurs peu complexes, ou mal synchronisés, ou qui ne sont pas bien calés sur la fréquence porteuse du signal transmis) ou à des intervalles spécifiques potentiellement réguliers ou périodiques (e.g. pour diminuer le PAPR (« Peak to Average Power Ratio ») du signal OFDM).
   - le bloc IFFT 101 de taille N fixée par la norme 3GPP 5G NR en fonction de l'espacement entre sous-porteuses sélectionné et de la bande de fréquence sélectionnée, et indépendamment du mode opérationnel sélectionné 1 ou 2, effectue une transformation de Fourier inverse (e.g. discrète et/ou rapide) sur le vecteur de symboles qui lui est fourni en entrée, puis délivre en sortie un symbole OFDM utile de taille N, qui est alors appliqué au bloc d'ajout de préfixe cyclique 102 (bloc CP+ 102).
dans une étape 301_2 :
   - le bloc CP+ 102 détermine, en fonction du mode 1 ou 2 sélectionné, pour chaque symbole OFDM utile fourni, le préfixe cyclique correspondant, qui est une copie de la fin du symbole OFDM utile : la taille de la portion de fin ainsi recopiée dépend du mode opérationnel 1 ou 2 sélectionné et est augmentée dans le mode 2 par rapport au mode 1 ;
   - le convertisseur parallèle/série 103 dispose en série le symbole OFDM complet composé du préfixe cyclique suivi du symbole OFDM utile correspondant ;
   - le module d'émission radio 10 (ou l'utilisation du module d'émission radio 10 à plusieurs reprises) construit une trame d'une première durée (de préférence 10 ms) pour le mode opérationnel 1 et d'une seconde durée (de préférence 15 ms) pour le mode opérationnel 2 ; une trame comporte une suite de plusieurs symboles OFDM ; le nombre des symboles OFDM insérés par trame par le module d'émission radio 10 est commun aux mode 1 ou 2, mais dépend de l'espacement Δf, de la bande de fréquence ; ce nombre est fixé par la norme 3GPP 5G NR ; la taille, la durée, le nombre d'échantillons et/ou la fréquence d'échantillonnage du symbole OFDM utile restent inchangés dans le mode 2 par rapport au mode 1.
dans une étape 301_3, le convertisseur numérique/analogique 104 convertit les symboles et/ou les trames numériques ainsi obtenues en signal analogique, pour une fréquence d'échantillonnage Fq_Ech spécifique (e.g. définie par le Tableau 2) et fournit le signal ainsi généré à l'antenne radioélectrique 105 pour émission radiofréquence.

Ainsi en transmission, entre le premier et le seconde mode opérationnel, les blocs S/P 100, IFFT 101 et DAC 104 ne changent pas. En revanche, le module d'émission radio 10 est utilisé moins souvent dans le mode 2 que dans le mode 1 et le bloc CP+ 102 fonctionne sur une taille différente, plus importante dans le mode 2, et le bloc P/S 103 également par voie de conséquence.

Dans le module de réception 20, en référence toujours à la figure 2, les étapes suivantes sont mises en œuvre :
dans une étape 302_1 :
   - l'antenne 201 reçoit un signal émis depuis un module d'émission 10 et fournit le signal analogique électrique résultant au convertisseur analogique/numérique 202 ;
   - le convertisseur analogique/numérique 202 numérise ce signal avec une fréquence d'échantillonnage Fq_Ech spécifique (e.g. définie par le Tableau 2) en fonction de la bande de fréquence et fournit les échantillons ainsi obtenus au bloc de retrait de préfixe cyclique 203 ;
dans une étape 302_2 :
   - le bloc CP- 203 retire du symbole OFDM le préfixe cyclique dont la taille est fonction du mode opérationnel 1 ou 2 et fournit le symbole OFDM utile au convertisseur série/parallèle 204 ;
   - le module de réception 20 extrait de chaque trame les symboles OFDM et puis les symboles OFDM utiles (e.g. un par un, séquentiellement ou en utilisant plusieurs modules 20), en nombre par trame, en fonction du mode opérationnel 1 ou 2 sélectionné,
   - le FFT 205 applique une transformation de Fourier (e.g. discrète et/ou rapide) au vecteur de valeurs qui lui est fourni en entrée, de même taille que celle ayant produit le symbole OFDM utile fourni, de la manière prescrite par 3GPP 5G NR, dans les modes 1 et 2. dans une étape 302_3 : en sortie du bloc FFT 205 est ainsi délivré un flux de symboles Rx, qui, après la soustraction de symboles d'intérêt (sur les sous-porteuses d'intérêt, i.e. les sous-porteuses qui sont utilisées) et après traitement par les couches OSI supérieures (e.g. High-PHY, MAC, RLC etc.) ,sera ensuite utilisé dans les applications du nœud de radiocommunication dont fait partie le module de réception 20.

Ainsi, en émission, entre le second mode opérationnel et le second mode opération, les blocs ADC 202, S/P 204 et FFT 205 ne changent pas. En revanche, le module 20 est utilisé moins fréquemment dans le mode 2 que dans le mode 1 et le CP-203 fonctionne sur une taille différente plus longue dans le mode 2 que dans le mode 1.

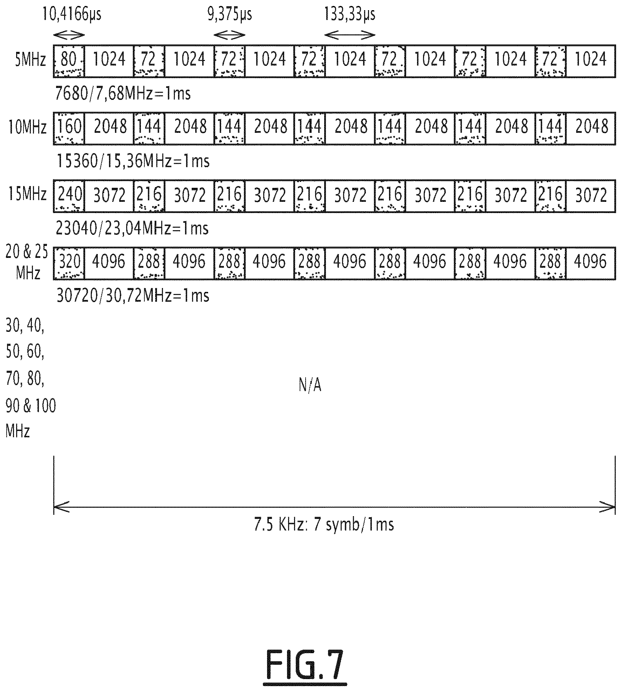

Les figures 3 à 7 illustrent différents modes de réalisation de l'invention, où la ressource correspondant à des nombres distincts de symboles OFDM (partie utile et préfixe correspondant) est réaffectée pour augmenter le préfixe des symboles OFDM transmis. Dans les modes de réalisation illustrés par les figures 3 à 6, les tailles des symboles utiles OFDM, dans les deux modes opérationnels 1 et 2, pour un espacement donné et une bande de fréquence considéré, sont égales et sont celles prescrites par la norme, en terme de durée et en terme du nombre N d'échantillons, tel qu'indiqué dans le tableau 2 plus haut. Dans les modes de réalisation illustrés par la figure 7, la durée des symboles utiles OFDM représente le double que le maximum prescrit par la norme dans le mode opérationnel 1 (car l'espacement est deux fois inférieur), mais compatible en terme du nombre N d'échantillons et/ou fréquence d'échantillonnage, tel qu'indiqué dans le tableau 2 plus haut.

Sur le principe de conserver un nombre de symbole identique par trame entre les premier et second modes opérationnels, mais en acceptant d'augmenter la durée de la trame (ou de la sous-trame, ou du slot, ou du demi-slot) dans le second mode par une facteur 1,5 par rapport à celle de la trame (ou de la sous-trame, ou du slot, ou du demi-slot) dans le premier mode, une combinatoire permet d'obtenir les différentes modifications de trame suivantes pour le mode 2 :
Pour une numérologie de 15 kHz :
   i. demi-slot comportant 5 symboles complets avec CP2_15kHz=33,3(3)µs=256/7.68MHz et Tu=66,6(6)µs=512/7.68MHz, et 2 symboles complets avec CP3_15kHz=58,3(3)µs=448/7.68MHz et Tu=66.6(6)µs=512/7.68MHz, pour un total de 0,75ms (au lieu de 0.5ms en mode 1) et/ou un TTI de 1.5ms (au lieu de 1ms en mode 1), soit un facteur 1.5 par rapport au TTI d'origine ;
   ii. demi-slot comportant 4 symboles complets avec CP3_15kHz=58,3(3)µs=448/7.68MHz et Tu=66.6(6)µs=512/7.68MHz, et 3 symboles avec CP1_15kHz=16,6(6)µs=128/7.68MHz et Tu=66.6(6)µs=512/7.68MHz ;
   iii. demi-slot comportant 1 symbole complet avec CP4_15kHz=41,1458(3)µs=316/7.68MHz et Tu=66.6(6)µs=512/7.68MHz, et 6 symboles complets avec CP5_15kHz=40,36458(3)µs=310/7.68MHz et Tu=66.6(6)µs=512/7.68MHz ;
   iv. demi-slot comportant 1 symbole complet avec CP6_15kHz=42,708(3)µs=328/7.68MHz et Tu=66.6(6)µs=512/7.68MHz, et 6 symboles complets avec CP7_15kHz=40,1041(6)µs=308/7.68MHz et Tu=66.6(6)µs=512/7.68MHz ;
   v. demi-slot comportant 1 symbole complet avec CP8_15kHz=45,8(3)µs=352/7.68MHz et Tu=66.6(6)µs=512/7.68MHz, et 6 symboles complets avec CP9_15kHz=39,58(3)µs=304/7.68MHz et Tu=66.6(6)µs=512/7.68MHz ;
   vi. demi-slot comportant 1 symbole complet avec CP10_15kHz=58,3(3)µs=448/7.68MHz et Tu=66.6(6)µs=512/7.68MHz, et 6 symboles complets avec CP11_15kHz=37,5µs=288/7.68MHz et Tu=66.6(6)µs=512/7.68MHz.
Pour une numérologie à 30 kHz :
   i. demi-slot comportant 5 symboles avec CP2_30kHz=16,6(6)µs=128/7.68MHz et Tu=33,3(3)µs=256/7.68MHz, et 2 symboles complets avec CP3_30kHz=29,1(6)µs=224/7.68MHz et Tu=33.3(3)µs=256/7.68MHz, pour un total de 0,375ms (au lieu de 0.250ms en mode 1) et/ou un TTI de 0.75ms (au lieu de 0.5ms en mode 1), soit un facteur 1.5 par rapport au TTI d'origine ;
   ii. demi-slot comportant 4 symboles avec CP3_30kHz=29,1(6)µs=224/7.68MHz et Tu=33.3(3)µs=256/7.68MHz, et 3 symboles complets avec CP1_30kHz=8,3(3)µs=64/7.68MHz et Tu=33,3(3)µs=256/7.68MHz ;
   iii. demi-slot comportant 1 symbole complet avec CP4_30kHz=20,57291(6)µs=158/7.68MHz et Tu=33.3(3)µs=256/7.68MHz, et 6 symboles complets avec CP5_30kHz=20,182291 (6)µs=155/7.68MHz et Tu=33.3(3)µs=256/7.68MHz (mais le dernier CP est impair en nombre d'échantillons et on ne peut pas le diviser pour une configuration 60 kHz, i.e. pour avoir un nombre entier d'échantillons par CP dans une configuration 60 kHz) ;
   iv. demi-slot comportant 1 symbole complet avec CP6_30kHz=21,3541(6)µs=164/7.68MHz et Tu=33.3(3)µs, et 6 symboles complets avec CP7_30kHz=20,05208(3)µs=154/7.68MHz et Tu=33.3(3)µs ;
   v. demi-slot comportant 1 symbole complet avec CP8_30kHz=22,91(6)µs=176/7.68MHz et Tu=33.3(3)µs, et 6 symboles complets CP9_30kHz=19,791(6)µs=152/7.68MHz et Tu=33.3(3)µs ;
   vi. demi-slot comportant 1 symbole complet avec CP10_30kHz=29,1(6)µs=224/7.68MHz et Tu=33.3(3)µs, et 6 symboles complets avec CP11_30kHz=18,75µs=144/7.68MHz et Tu=33.3(3)µs.
Pour une numérologie à 60 kHz :
   i. demi-slot comportant 5 symboles complets avec CP2_60kHz=8,3(3)µs=64/7.68MHz=128/15.36MHz et Tu=16.6(6)µs=128/7.68MHz=256/15.36MHz, et 2 symboles complets CP3_60kHz=14,58(3)µs=112/7.68MHz=224/15.36MHz et Tu=16.66(6)µs=128/7.68MHz=256/15.36MHz, pour une durée totale de 125+62,5=187,5µs (au lieu de 125µs pour le mode 1), soit un facteur 1.5 par rapport au TTI d'origine ;
   ii. demi-slot comportant 4 symboles complets avec CP3_60kHz=14,58(3)µs=112/7.68MHz=224/15.36MHz et Tu=16.66(6)µs=128/7.68MHz=256/15.36MHz, et 3 symboles complets avec CP1_60kHz=4,1(6)µs=32/7.68MHz=64/15.36MHz et Tu=16.6(6)µs=128/7.68MHz=256/15.36MHz ;
   iii. Cette configuration (normalement) n'existe pas car elle suppose un nombre impair d'échantillons (155/2 pour la bande de 5 MHz, ou pour 465/2 pour la bande de 15 MHz), mais ça peut exister pour les autres configurations dépendantes (i.e. d'autres configurations de bande, et potentiellement d'autres numérologies).
   iv. demi-slot comportant 1 symboles complet avec CP6_60kHz=10,67708(3)µs=82/7.68MHz=164/15.36MHz et Tu=16.66(6)µs=128/7.68MHz=256/15.36MHz, et 6 symboles complets avec CP7_60kHz=10,026041(6)µs=77/7.68MHz=154/15.36MHz et Tu=16.66(6)µs=128/7.68MHz=256/15.36MHz (mais le dernier CP est impair en nombre d'échantillons et on ne pourra pas le diviser pour une configuration 120 kHz ou 240 kHz) ;
   v. demi-slot comportant 1 symboles complet avec CP8_60kHz=11,458(3)µs=88/7.68MHz=176/15.36MHz et Tu=16.66(6)µs=128/7.68MHz=256/15.36MHz, et 6 symboles complets avec CP9_60kHz=9,8958(3)µs=76/7.68MHz=152/15.36MHz et Tu=16.66(6)µs=128/7.68MHz=256/15.36MHz (on peut diviser le dernier CP pour une configuration 120 kHz ou 240 kHz, mais pas pour une configuration 480 kHz) ;
   vi. demi-slot comportant 1 symboles complet avec CP10_60kHz=14,58(3)µs=112/7.68MHz=224/15.36MHz et Tu=16.66(6)µs=128/7.68MHz=256/15.36MHz, et 6 symboles complets avec CP11_60kHz=9,375µs=72/7.68MHz=144/15.36MHz et Tu=16.66(6)µs=128/7.68MHz=256/15.36MHz (par la suite, on peut diviser le premier mais aussi le dernier CP en nombre entier d'échantillons pour permettre une configuration 120, 240 ou 480 kHz).
Pour une numérologie 7.5 kHz :
   i. demi-slot comportant 5 symboles complets avec CP2_7kHz5=66,6(6)µs=512/7.68MHz et Tu=133,3(3)µs=1024/7.68MHz, et 2 symboles complets avec CP3_7kHz5=116,6(6)µs=896/7.68MHz et Tu 133,3(3)µs=1024/7.68MHz, pour une durée totale de 1.5ms (au lieu de 1ms dans le mode 1) ;
   ii. demi-slot comportant 4 symboles complets avec CP3_7kHz5=116,6(6)µs=896/7.68MHz et Tu=133,3(3)µs=1024/7.68MHz, et 3 symboles complets avec CP1_7kHz5=33,3(3)µs=256/7.68MHz et Tu=133,3(3)µs=1024/7.68MHz ;
   iii. demi-slot comportant 1 symbole complet avec CP4_7kHz5=82,291(6)µs=632/7.68MHz et Tu=133,3(3)µs=1024/7.68MHz, et 6 symboles complets avec CP5_7kHz5=80,7291(6)µs=620/7.68MHz et Tu=133,3(3)µs=1024/7.68MHz ;
   iv. demi-slot comportant 1 symbole complet avec CP6_7kHz5=85,41(6)µs=656/7.68MHz Tu=133.3(3)µs, et 6 symboles complets avec CP7_7kHz5=80,208(3)µs=616/7.68MHz et Tu=133.3(3)µs ;
   v. demi-slot comportant 1 symbole complet avec CP8_7kHz5=91,6(6)µs=704/7.68MHz et Tu=133.3(3)µs=1024/7.68MHz, et 6 symboles complets, et 6 symboles complets avec CP9_7kHz5=79,1(6)µs=608/7.68MHz & pour tous les symboles 1-7 Tu=133.3(3)µ3, pour une durée totale de 1.5ms (au lieu de 1ms)
   vi. demi-slot comportant 1 symbole complet avec CP10_7kHz5=116,6(6)µs=896/7.68MHz et Tu=133,3(3)µs=1024/7.68MHz, et 6 symboles complets avec CP11_7kHz5=75µs=576/7.68MHz et Tu=133,3(3)µs=1024/7.68MHz.

Chaque modification indiquée ci-dessus présente autant de variations que d'arrangements possibles de symboles complets de longueur différentes les uns par rapport aux autres à l'intérieur d'un demi-slot (ou slot, ou sous-trame, ou trame).

On notera que dans les formats présentés ci-dessus, on cherche à avoir des durées de CPs équivalentes dans une trame/sous-trame/slot/demi-slot, notamment en maximisant le nombre de CPs identiques, avec un nombre entier d'échantillons par CP (et tout en respectant le nombre d'échantillons nécessaire pour le symbole utile).

Certaines modifications ne sont pas évidentes car elles ne sont pas compatibles avec la numérologie. En effet, il faut trouver un nombre d'échantillons qui est compatible avec toutes les numérologies, i.e. qu'on peut diviser pour obtenir un nombre entier d'échantillons par CP pour les numérologies supérieures. Ces contraintes ont conduit aux différentes modifications iii, iv, v, vi. La modification vi étant plus flexible par rapport aux modifications iii, iv, v, parce qu'elle permet un nombre plus grand de numérologies possibles.

Dans le tableau 3 ci-dessous sont indiqués les nombres des échantillons par CP, et les fréquences d'échantillonnage Fq_Ech (exprimées en [Méga échantillons par seconde] ou « Mega Samples per second » ou MSps) en fonction des espacements Δf et des bandes de fréquences, valables pour le mode opérationnel 2, par demi-slot de 7 symboles.

**Tableau 3 : Modifications de trame/sous-trame/slot/demi-slot pour le mode opérationnel 2 - nombre d'échantillons par CP**

| SCS ou Δf [kHz] | Configuration Bande de Fréquence [MHz] | Fq_Ech [MSps] | Taille CP [en nombre d'échantillons par CP] pour les différentes modifications/configurations | | | | | |
|---|---|---|---|---|---|---|---|---|
| | | | i (5+2 symb.) | ii (4+3 symb.) | iii (1+6 symb.) | iv (1+6 symb.) | v (1+6 symb.) | vi (1+6 symb.) |
| 15 kHz | 5 MHz | 7.68 | 256 et 448 | 448 et 128 | 316 et 310 | 328 et 308 | 352 et 304 | 448 et 288 |
| | 10 MHz | 15.36 | 512 et 896 | 896 et 256 | 632 et 620 | 656 et 616 | 704 et 608 | 896 et 576 |
| | 15 MHz | 23.04 | 768 et 1344 | 1344 et 384 | 984 et 930 | 984 et 924 | 1056 et 912 | 1344 et 864 |
| | 20 & 25 MHz | 30.72 | 1024 et | 1792 et | 1264 et | 1312 et | 1408 et | 1792 et |
| | | | 1792 | 512 | 1240 | 1232 | 1216 | 1152 |
| | 30 MHz | 46.08 | 1536 et 2688 | 2688 et 768 | 1896 et 1860 | 1968 et 1848 | 2112 et 1824 | 2688 et 1728 |
| | 40 & 50 MHz | 61.44 | 2048 et 3584 | 3584 et 1024 | 2528 et 2480 | 2624 et 2464 | 2816 et 2432 | 3584 et 2304 |
| | 60 & 70 MHz | 92.16 | - | - | - | - | - | - |
| | 80, 90 & 100 MHz | 122.88 | - | - | - | - | - | - |
| 30 kHz | 5 MHz | 7.68 | 128 et 224 | 224 et 64 | 158 et 155 | 164 et 154 | 176 et 152 | 224 et 144 |
| | 10 MHz | 15.36 | 256 et 448 | 448 et 128 | 316 et 310 | 328 et 308 | 352 et 304 | 448 et 288 |
| | 15 MHz | 23.04 | 384 et 672 | 672 et 192 | 474 et 465 | 492 et 462 | 528 et 456 | 672 et 432 |
| | 20 & 25 MHz | 30.72 | 512 et 896 | 896 et 256 | 632 et 620 | 656 et 616 | 704 et 608 | 896 et 576 |
| | 30 MHz | 46.08 | 768 et 1344 | 1344 et 384 | 948 et 930 | 984 et 924 | 1056 et 912 | 1344 et 864 |
| | 40 & 50 MHz | 61.44 | 1024 et 1792 | 1792 et 512 | 1264 et 1240 | 1312 et 1232 | 1408 et 1216 | 1792 et 1152 |
| | 60 & 70 MHz | 92.16 | 1536 et 2688 | 2688 et 768 | 1896 et 1860 | 1968 et 1848 | 2112 et 1824 | 2688 et 1728 |
| | 80, 90 & 100 MHz | 122.88 | 2048 et 3584 | 3584 et 1024 | 2528 et 2480 | 2624 et 2464 | 2816 et 2432 | 3584 et 2304 |
| 60 kHz | 5 MHz | 7.68 | - | - | - | - | - | - |
| | 10 MHz | 15.36 | 128 et 224 | 224 et 64 | 158 et 155 | 164 et 154 | 176 et 152 | 224 et 144 |
| | 15 MHz | 23.04 | 192 et 336 | 336 et 96 | - | 246 et 231 | 264 et 228 | 336 et 216 |
| | 20 & 25 MHz | 30.72 | 256 et 448 | 448 et 128 | 316 et 310 | 328 et 308 | 352 et 304 | 448 et 288 |
| | 30 MHz | 46.08 | 384 et 672 | 672 et 192 | 474 et 465 | 492 et 462 | 528 et 456 | 672 et 432 |
| | 40 & 50 MHz | 61.44 | 512 et 896 | 896 et 256 | 632 et 620 | 656 et 616 | 704 et 608 | 896 et 576 |
| | 60 & 70 MHz | 92.16 | 768 et 1344 | 1344 et 384 | 948 et 930 | 984 et 924 | 1056 et 912 | 1344 et 864 |
| | 80, 90 & 100 MHz | 122.88 | 1024 et 1792 | 1792 et 512 | 1264 et 1240 | 1312 et 1232 | 1408 et 1216 | 1792 et 1152 |
| 7.5 kHz | 5 MHz | 7.68 | 512 et 896 | 896 et 256 | 632 et 620 | 656 et 616 | 704 et 608 | 896 et 576 |
| | 10 MHz | 15.36 | 1024 et 1792 | 1792 et 512 | 1264 et 1240 | 1312 et 1232 | 1408 et 1216 | 1792 et 1152 |
| | 15 MHz | 23.04 | 1536 et 2688 | 2688 et 768 | 1896 et 1860 | 1968 et 1848 | 2112 et 1824 | 2688 et 1728 |
| | 20 & 25 MHz | 30.72 | 2048 et 3584 | 3584 et 1024 | 2528 et 2480 | 2624 et 2464 | 2816 et 2432 | 3584 et 2304 |
| | 30 MHz | 46.08 | - | - | - | - | - | - |
| | 40 & 50 MHz | 61.44 | - | - | - | - | - | - |
| | 60 & 70 MHz | 92.16 | - | - | - | - | - | - |
| | 80, 90 & 100 MHz | 122.88 | - | - | - | - | - | - |

Dans le tableau 3, la première configuration sur 5 MHz n'est pas utilisable (en général) pour une numérologie 60 kHz (comme pour la 5G NR) parce qu'on a un nombre trop réduit de « Ressource Blocks » (RBs) disponibles - i.e. d'environ 5 ou 6 (pour une numérologie de 60 kHz, la taille d'un RB est de 180x4 kHz ou 360x2 kHz = 720 kHz). Toujours pour la numérologie de 60 kHz, la modification iii n'est pas entièrement disponible pour toutes les configurations de bande (voir par exemple 5 MHz et 15 MHz - parce que ça correspond à un nombre non-entier d'échantillons). C'est aussi le cas pour une numérologie de 120 kHz dans une modification iv (non-représentée), ou une numérologie de 240 kHz dans une modification iv (non-représentée), ou par exemple pour une numérologie de 480 kHz dans une modification v (non-représentée). La modification vi a donc été introduite pour permettre la compatibilité avec une numérologie de 480 kHz avec un nombre entier d'échantillons par CP dans le mode opérationnel 2.

De la même manière, dans le tableau 3, les dernières configurations de bande ne sont pas utilisables pour une numérologie de 7.5 kHz (i.e. les configurations supérieures à 25 MHz, ou à partir de 30 MHz) et pour une numérologie de 15 KHz (i.e. les configurations supérieures à 50 MHz, ou à partir de 60 MHz) parce qu'on doit utiliser une transformée FFT/IFFT qui dépasse la taille de 4096 (et actuellement pour la 5G NR ce n'est pas prévu par la norme 3GPP).

Par exemple, sur la figure 3 est représenté, pour un espacement Δf égal à 15 kHz, un demi-slot de 0.5 ms (i.e. séquence nommée « demi-slot » selon 3GPP 5G NR, ou un « slot » est égal à 14 symboles OFDM/DFT-s-OFDM), pour les différentes bandes de fréquences 5, 10, 15, 20, 25, 30, 40, 50 MHz, dans le mode opérationnel 1 du 3GPP 5G NR nominal. Un slot comporte 14 symboles et donc le demi-slot comporte 7 symboles.

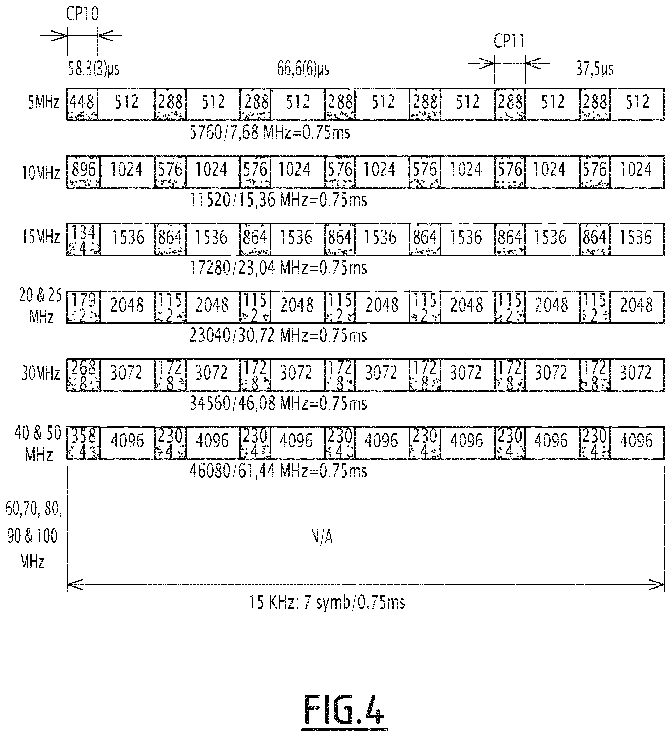

Sur la figure 4 est représenté, également pour un espacement Δf égal à 15 kHz, un demi-slot de 0.75 ms, pour les différentes bandes de fréquences 5, 10, 15, 20, 25, 30, 40, 50 MHz, dans le mode opérationnel 2. La figure 4 représente plus spécifiquement la modification vi de la numérologie 15 kHz. Le demi-slot a été rallongé pour comporter le même nombre de sept symboles OFDM que dans le mode 1 de la figure 3, mais avec des préfixes plus longs.

Sous la représentation de chaque demi-slot sont indiqués le nombre d'échantillons par demi-slot, la fréquence d'échantillonnage et la durée par demi-slot. Le nombre d'échantillons par demi-slot divisé par la fréquence d'échantillonnage indique la durée d'un demi-slot. Le nombre d'échantillons par symbole divisé par la fréquence d'échantillonnage indique la durée d'un symbole. Le nombre d'échantillons par préfixe cyclique divisé par la fréquence d'échantillonnage indique la durée du préfixe cyclique.

Dans chaque demi-slot, chaque symbole OFDM utile comporte un nombre N d'échantillons qui est indiqué sur la représentation du demi-slot. Le nombre N d'échantillons est celui prescrit par la norme (exemple pour 5 MHz, N = 512). Chaque symbole OFDM utile est précédé par son préfixe cyclique, de taille CP prescrite par la norme pour le mode opérationnel 1 (figure 3) et indiquée en nombre d'échantillons sur la représentation du demi-slot, et de taille supérieure, CP10_15kHz ou CP11_15kHz indiquée sur la représentation du demi-slot pour le mode opérationnel 2 (figure 4).

Dans ce mode opérationnel 2, pour un espacement de 15 kHz et 7 symboles OFDM par demi-slot : 1 symbole complet avec CP10_15kHz=58,3(3)µs=448/7.68MHz et Tu=66.6(6)µs=512/7.68MHz, suivi de 6 symboles complets avec CP11_15kHz=37,5µs=288/7.68MHz et Tu=66.6(6)µs=512/7.68MHz, pour un total de 0.75ms (au lieu de 0.5 ms) et un slot et/ou un TTI (ou « Time Transmission Interval » en Anglais, Interval/Durée de Transmission) de 1.5 ms (au lieu de 1 ms), soit un facteur 1.5 sur le slot et/ou le TTI du premier mode.

De façon similaire à ce qui a été présenté ci-dessus en référence à la figure 3 pour un espacement de 15 kHz, la figure 5 illustre maintenant le contenu d'un demi-slot de 0.25 ms (correspondant pour cet espacement, à un « demi-slot » selon 3GPP 5G NR, ou un « slot » est égal à 14 symboles OFDM/DFT-s-OFDM), dans le mode opérationnel 1, pour un espacement de 30 kHz.

Ainsi sur la figure 5, sont représentés, pour un espacement Δf égal à 30 kHz, des exemples pour les différentes bandes de fréquences 5, 10, 15, 20, 25, 30, 40, 50, 60, 70, 80, 90, 100 MHz, dans le mode opérationnel 1 du 3GPP 5G NR nominal. Le demi-slot comporte 7 symboles.

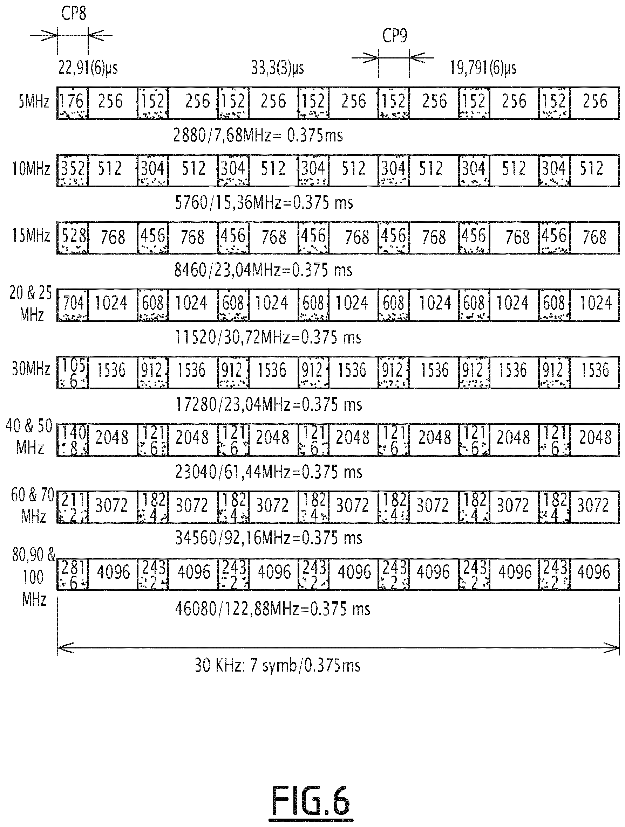

De façon similaire à ce qui a été présenté ci-dessus en référence à la figure 4 pour un espacement de 15 kHz, la figure 6 illustre maintenant le contenu d'un demi-slot de 0.375 ms (ou un « slot » est égal à 14 symboles OFDM/DFT-s-OFDM), dans le mode opérationnel 2, pour un espacement de 30 kHz.

Sur la figure 6 est représenté, également pour un espacement Δf égal à 30 kHz, un demi-slot de 0.375 ms, pour les différentes bandes de fréquences 5, 10, 15, 20, 25, 30, 40, 50, 60, 70, 80, 90, 100 MHz, dans le mode opérationnel 2. La figure 6 représente plus spécifiquement la modification v de la numérologie 30 kHz. Le demi-slot a été allongé pour comporter le même nombre de sept symboles OFDM que dans le mode 1 de la figure 5, mais avec des préfixes plus longs.

Dans chaque demi-slot, tant dans le mode opérationnel 1 que le mode opérationnel 2, chaque symbole OFDM utile comporte un nombre N d'échantillons qui est indiqué sur la représentation du demi-slot et qui est celui prescrit par la norme (exemple pour 5 MHz, N = 256). Chaque symbole OFDM utile est précédé par son préfixe cyclique, de taille CP prescrite par la norme pour le mode opérationnel 1 et indiquée en nombre d'échantillons sur la représentation du demi-slot (figure 5), et de taille supérieure, CP8_30kHz ou CP9_30kHz indiqué sur la représentation du demi-slot pour le mode opérationnel 2 (figure 6).

Dans ce mode opérationnel 2, pour un espacement de 30 kHz et 7 symboles OFDM par demi-slot : 1 symbole complet avec CP8_30kHz=22,91(6)µs=176/7.68MHz et Tu=33.3(3)µs, suivi de 6 symboles complets CP9_30kHz=19,791 (6)µs=152/7.68MHz et Tu=33.3(3)µs.

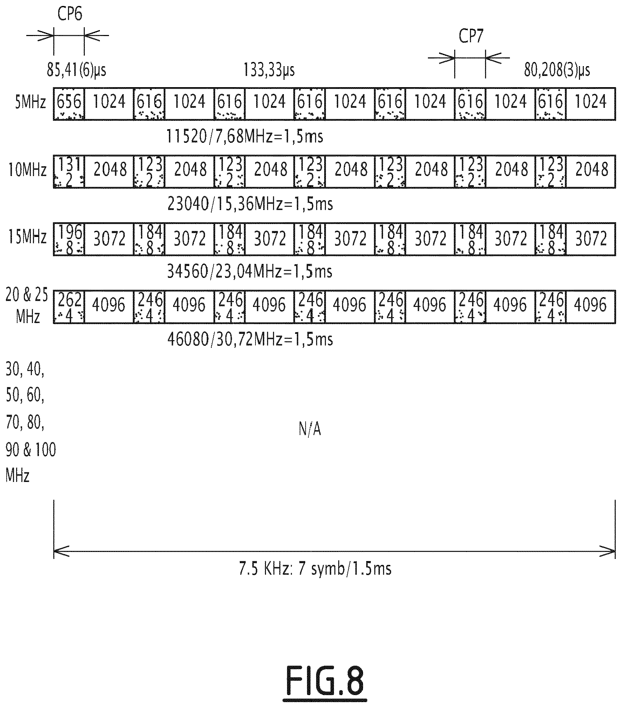

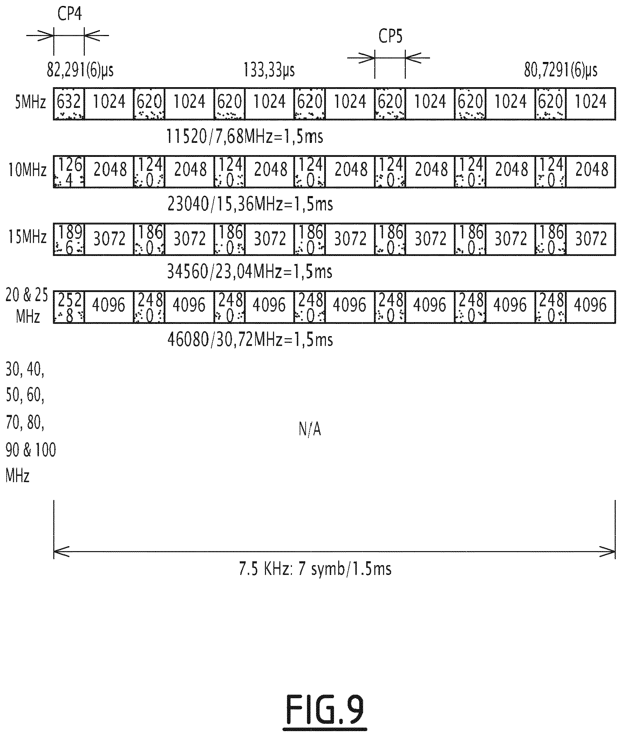

De façon similaire à ce qui a été présenté ci-dessus en référence aux figures 3 et 4 pour un espacement de 15 kHz ou aux figures 5 et 6 pour un espacement de 30 kHz, les figures 7, 8 et 9 illustrent des configurations en 7,5 kHz avec 7 symboles par demi-slot, soit de durée 1 ms pour le mode 1 (figure 7) (avec durée du premier CP de 10,41(6) µs (10,417 µs par approximation), durée des CP suivants de 9,375 µs et durée de chaque symbole OFDM utile de 133,3(3) µs ou 133,333 µs par approximation), soit de durée 1.5 ms pour le mode 2 (figures 8 et 9).

Sur la figure 8 est représenté, également pour un espacement Δf égal à 7.5 kHz, un demi-slot de 1.5 ms, pour les différentes bandes de fréquences 5, 10, 15, 20, 25 MHz, dans le mode opérationnel 2. La figure 8 représente plus spécifiquement la modification iv de la numérologie 7.5 kHz. Le demi-slot a été allongé pour comporter le même nombre de symboles OFDM/DFT-s-OFDM que dans le mode 1 de la figure 7 mais avec des préfixes plus longs.

Dans cette modification iv du mode opérationnel 2, pour un espacement de 7.5 kHz et 7 symboles OFDM/DFT-s-OFDM par demi-slot : 1 symbole complet avec CP6_7kHz5=85,41(6)µs=656/7.68MHz Tu=133.3(3)µs, et 6 symboles complets avec CP7_7kHz5=80,208(3)µs=616/7.68MHz et Tu=133.3(3)µs, pour une durée totale de 1.5ms (au lieu de 1ms).

Sur la figure 9 est représenté, également pour un espacement Δf égal à 7.5 kHz, un demi-slot de 1.5 ms, pour les différentes bandes de fréquences 5, 10, 15, 20, 25 MHz, dans le mode opérationnel 2. La figure 9 représente plus spécifiquement la modification iii de la numérologie 7.5 kHz. Le demi-slot a été allongé pour comporter le même nombre de symboles OFDM que dans le mode 1 de la figure 7 mais avec des préfixes plus longs.

Dans cette modification iii du ce mode opérationnel 2, pour un espacement de 7.5 kHz et 7 symboles OFDM par demi-slot : 1 symbole complet avec CP4_7kHz5=82,291(6)µs=632/7.68MHz et Tu=133,3(3)µs=1024/7.68MHz, et 6 symboles complets avec CP5_7kHz5=80,7291(6)µs=620/7.68MHz et Tu=133,3(3)µs=1024/7.68MHz.

La présente invention propose donc, pour une numérologie donnée, tout en conservant un nombre d'échantillons par symbole utile et un nombre de symboles utiles par trame/sous-trame/slot/demi-slot égaux à ce qui est défini par la norme, d'augmenter le nombre d'échantillons des préfixes cycliques (et/ou suffixes cycliques), tout en respectant la contrainte que le nombre d'échantillons d'un symbole complet est choisi pour qu'il reste compatible avec les tailles IFFT/FFT.

On change la durée d'un slot et/ou la durée d'un TTI (Time Transmission Interval), d'un facteur de 1.5 par exemple. Dans ce cas, c'est équivalent à transmettre seulement deux trames de 15ms (ou sous-trames de 1.5ms) pour chaque trois trames de 10 ms (ou sous-trames de 1ms) envoyées, tout en respectant la norme.

L'invention facilite la réutilisation d'allocation de ressources par rapport à la norme 5G NR. L'avantage réside dans la possibilité de réutiliser la couche MAC existante et éventuellement les couches supérieures sans effectuer des modifications importantes, par exemple sans avoir besoin de redéfinir des nouveaux blocs de transport (« transport blocks ») et une nouvelle allocation de ressources. L'invention permet donc une allocation de ressources en réutilisant (au moins) le « scheduler » MAC (la même allocation de ressources de la sous-couche MAC (niveau L2) ou « Médium Access Control », mais aussi les sous-couches/couches supérieures) et d'autres mécanismes prévus par la norme 3GPP (et avantageusement également la structure des pilotes au niveau couche PHY (niveau L1), comme par exemple la périodicité en temps et en fréquence, et/ou le nombre de pilotes par sous-trame ou trame, et/ou par bloc(s) de ressource(s) ou « ressource(s) block(s) », mais aussi le codage/décodage canal, les modulations, les MCS (schémas de modulation et codage, ou « Modulation et Coding Schemes ») les tailles IFFT/FFT, etc.).

L'invention peut utiliser seulement le mode opérationnel 2, ou alternativement le mode opérationnel 2 et le mode opérationnel 1, sur un ou plusieurs demi-slots/slots/sous-trames/trames. Cela pourrait être utile pour pouvoir bénéficier d'une manière optimale (et en même temps) de plusieurs (types de) services qui ne fonctionnent pas dans les mêmes conditions de propagation (e.g. type canal radio, multi-trajets, etc.) et/ou qui n'ont pas les mêmes exigences en termes de latence, débit, synchronisation, pertes/erreurs de réception (e.g. « Packet Error Rate » ou PER, « Bit Error Rate » ou BER, « Block Level Error Rate » ou BLER, etc.), ou exigences en termes de qualité du signal reçu (e.g. le rapport signal à bruit plus interférence, « Signal to Noise plus Interference Ratio » ou SINR, avec les MCS associés, etc.) etc.

La présente invention offre une meilleure résistance aux multi-trajets et répond aux problèmes de synchronisation multipoint à point, par exemple supérieurs à 5 µs pour une configuration de 15 kHz ou à 2.5 µs pour une configuration de 30 kHz.

En effet, les erreurs de synchronisation peuvent s'additionner aux multi trajets, et donc il faut prendre en compte un CP qui considère :
- l'écart max entre les multi-trajets (pour les canaux complexes on peut avoir entre 5-10 µs)
- le temps de propagation (10 µs ça peut être suffisant pour des distances < 3 km) si on n'utilise pas ou on ne peut pas utiliser des mécanismes de type TA (ou « Timing Advance ») - valable entre autres pour le cas D2D/V2V/V2X
- les erreurs de synchronisation/les asynchronismes (e.g. 10 µs) entre les (multiples) transmetteurs potentiels pour le broadcast/multicast, pour le relayage ou pour la diversité coopérative.

Si on somme les effets, il peut s'avérer nécessaire d'avoir des CPs qui dépassent facilement 20-30 µs, ce qu'il n'est pas du tout prévu par la norme 3GPP 5G NR.

Il a été décrit ci-dessus des préfixes cycliques. Dans un mode de réalisation, à la place (ou en plus) des préfixes cycliques sont utilisés des suffixes cycliques (CS ou "Cyclic Suffix"), qui ont la même structure (i.e. le même nombre d'échantillons) que les préfixes cycliques (CP) définis ci-dessus, mais qui sont ajoutés à la fin du symbole utile, en copiant une portion de début du symbole utile.

De la même manière on peut utiliser par exemple un ZP (Préfixe Zéro ou « Zero Prefix ») de la même taille que le CP, mais en ajoutant des échantillons de valeur zéro (ou proches de zéro). Pour rappel, la technique avec un préfixe cyclique CP consiste à recopier les derniers échantillons du symbole utile au début de celui-ci. La technique avec un préfixe zéro ZP consiste à insérer des zéros au début du symbole utile. Ces deux techniques conduisent naturellement à une diminution de l'efficacité spectrale.

De la même manière on notera qu'une augmentation du préfixe cyclique, et/ou du préfixe zéro et/ou le suffixe cyclique conduit également à une diminution d'efficacité spectrale.

L'invention peut utiliser une seule numérologie par demi-slot/slot/sous-trame/trame, ou plusieurs numérologies dans le cadre du même demi-slot/slot/sous-trame/trame. Par exemple, ça peut être nécessaire de mélanger des numérologies (i.e. utiliser plusieurs numérologies) dans le cadre du même demi-slot/slot/sous-trame/trame, ou d'avoir plusieurs demi-slots et/ou slots et/ou sous-trames et/ou trames configurées (périodiquement ou non, d'une manière dynamique ou d'une manière statique) avec des numérologies différentes, par exemple. Cela pourrait être utile pour pouvoir bénéficier d'une manière optimale (et en même temps) de plusieurs (types de) services qui ne fonctionnent pas dans les mêmes conditions de propagation (e.g. type canal radio, multi-trajets, etc.) et/ou qui n'ont pas les mêmes exigences en termes de latence, débit, synchronisation, pertes/erreurs de réception (e.g. « Packet Error Rate » ou PER, « Bit Error Rate » ou BER, « Block Level Error Rate » ou BLER, etc.), ou exigences en termes de qualité du signal reçu (e.g. le rapport signal à bruit plus interférence, « Signal to Noise plus Interference Ratio » ou SINR, avec les MCS associés, etc.) etc..

L'invention peut bien sûr être mise en œuvre avec des techniques d'accès multiple comme OFDMA & SC-FDMA (« orthogonal frequency-division multiple access », technique d'accès multiple qui utilise OFDM « orthogonal frequency-division multiplexing » ; « single-carrier frequency division multiple access » qui utilise SC-FDM « Single carrier frequency-division multiplexing »).

L'invention peut bien sûr être mise en oeuvre dans des modes TDD ou FDD.

Dans un autre mode de réalisation, un ou plusieurs des blocs IFFT 101, CP+ 102, CP- 203, FFT 205 sont réalisés sous forme d'un composant logique programmable, tel qu'un (ou plusieurs) DSP (de l'anglais *Digital Signal Processor*)*,* FPGA (de l'anglais *Field Programmable Gate Array*), ou encore sous forme d'un circuit intégré dédié, tel qu'un ASIC (de l'anglais *Applications Specific Integrated Circuit*)*.*

## Revendications

1. Procédé d'émission de trames radio (301), dans un module électronique d'émission radio, comprenant les étapes suivantes :
- pour un espacement Δf quelconque entre sous-porteuses fréquentielles préalablement sélectionné entre plusieurs espacements, un nombre déterminé d'échantillons N par symbole OFDM utile et une bande fréquentielle d'émission déterminée, où lesdits espacement Δf, nombre d'échantillons N par symbole OFDM utile et bande fréquentielle d'émission BW sont tels que prescrits par la norme 3GPP 5G NR et définissent une configuration d'émission courante, génération de symboles OFDM utiles ;
- constitution d'une trame radio dans laquelle chaque symbole OFDM utile est précédé d'un préfixe cyclique, respectivement suivi d'un suffixe cyclique, répétant une partie dudit symbole OFDM utile ;
ledit procédé d'émission étant **caractérisé en ce que** le nombre total de symboles OFDM utiles dans un demi-slot radio associé à la trame radio est égal au nombre prescrit par la norme 3GPP 5G NR pour ladite configuration et **en ce qu'**une durée du demi-slot radio est augmentée de manière à pouvoir accommoder ledit nombre de symboles OFDM utiles tout en augmentant également la taille des préfixes, respectivement des suffixes, cycliques ajoutés aux symboles OFDM utiles par rapport à la taille des préfixes, respectivement suffixes, prescrites par ladite norme 3GPP 5G NR pour ladite configuration.

2. Procédé d'émission de trames radio (301) selon la revendication 1, selon lequel la durée du demi-slot radio est 1.5 fois plus longue que la durée du demi-slot radio prescrite par ladite norme 3GPP 5G NR pour ladite configuration.

3. Procédé d'émission de trames radio (301) selon la revendication 2, dans lequel un format de constitution d'un demi-slot radio est sélectionné parmi l'un des formats suivants, où un symbole complet est un symbole OFDM utile augmenté d'un préfixe cyclique, respectivement d'un suffixe cyclique :
pour une numérologie de 15 kHz :
i) demi-slot comportant 5 symboles complets avec un préfixe cyclique, respectivement un suffixe cyclique, de durée CP2_15kHz=33,3(3)µs=256/7.68MHz et un symbole OFDM utile de durée Tu=66,6(6)µs=512/7.68MHz, et 2 symboles complets avec CP3_15kHz=58,3(3)µs=448/7.68MHz et Tu=66.6(6)µs=512/7.68MHz ;
ii) demi-slot comportant 4 symboles complets avec CP3_15kHz=58,3(3)µs=448/7.68MHz et Tu=66.6(6)µs=512/7.68MHz, et 3 symboles avec CP1_15kHz=16,6(6)µs=128/7.68MHz et Tu=66.6(6)µs=512/7.68MHz ;
iii) demi-slot comportant 1 symbole complet avec CP4_15kHz=41,1458(3)µs=316/7.68MHz et Tu=66.6(6)µs=512/7.68MHz, et 6 symboles complets avec CP5_15kHz=40,36458(3)µs=310/7.68MHz et Tu=66.6(6)µs=512/7.68MHz ;
iv) demi-slot comportant 1 symbole complet avec CP6_15kHz=42,708(3)µs=328/7.68MHz et Tu=66.6(6)µs=512/7.68MHz, et 6 symboles complets avec CP7_15kHz=40,1041(6)µs=308/7.68MHz et Tu=66.6(6)µs=512/7.68MHz ;
v) demi-slot comportant 1 symbole complet avec CP8_15kHz=45,8(3)µs=352/7.68MHz et Tu=66.6(6)µs=512/7.68MHz, et 6 symboles complets avec CP9_15kHz=39,58(3)µs=304/7.68MHz et Tu=66.6(6)µs=512/7.68MHz ;
vi) demi-slot comportant 1 symbole complet avec CP10_15kHz=58,3(3)µs=448/7.68MHz et Tu=66.6(6)µs=512/7.68MHz, et 6 symboles complets avec CP11_15kHz=37,5µs=288/7.68MHz et Tu=66.6(6)µs=512/7.68MHz ;
pour une numérologie à 30 kHz :
i) demi-slot comportant 5 symboles avec CP2_30kHz=16,6(6)µs=128/7.68MHz et Tu=33,3(3)µs=256/7.68MHz, et 2 symboles complets avec CP3_30kHz=29,1(6)µs=224/7.68MHz et Tu=33.3(3)µs=256/7.68MHz ;
ii) demi-slot comportant 4 symboles avec CP3_30kHz=29,1(6)µs=224/7.68MHz et Tu=33.3(3)µs=256/7.68MHz, et 3 symboles complets avec CP1_30kHz=8,3(3)µs=64/7.68MHz et Tu=33,3(3)µs=256/7.68MHz ;
iii) demi-slot comportant 1 symbole complet avec CP4_30kHz=20,57291(6)µs=158/7.68MHz et Tu=33.3(3)µs=256/7.68MHz, et 6 symboles complets avec CP5_30kHz=20,182291(6)µs=155/7.68MHz et Tu=33.3(3)µs=256/7.68MHz ;
iv) demi-slot comportant 1 symbole complet avec CP6_30kHz=21,3541(6)µs=164/7.68MHz et Tu=33.3(3)µs, et 6 symboles complets avec CP7_30kHz=20,05208(3)µs=154/7.68MHz et Tu=33.3(3)µs ;
v) demi-slot comportant 1 symbole complet avec CP8_30kHz=22,91(6)µs=176/7.68MHz et Tu=33.3(3)µs, et 6 symboles complets CP9_30kHz=19,791(6)µs=152/7.68MHz et Tu=33.3(3)µs ;
vi) demi-slot comportant 1 symbole complet avec CP10_30kHz=29,1(6)µs=224/7.68MHz et Tu=33.3(3)µs, et 6 symboles complets avec CP11_30kHz=18,75µs=144/7.68MHz et Tu=33.3(3)µs ;
pour une numérologie à 60 kHz :
i) demi-slot comportant 5 symboles complets avec CP2_60kHz=8,3(3)µs=64/7.68MHz et Tu=16.6(6)µs=128/7.68MHz, et 2 symboles complets CP3_60kHz=14,58(3)µs=112/7.68MHz et Tu=16.66(6)µs=128/7.68MHz ;
ii) demi-slot comportant 4 symboles complets avec CP3_60kHz=14,58(3)µs=112/7.68MHz et Tu=16.66(6)µs=128/7.68MHz, et 3 symboles complets avec CP1_60kHz=4,1(6)µs=32/7.68MHz et Tu=16.6(6)µ3=128/7.68MHz ;
iv) demi-slot comportant 1 symboles complet avec CP6_60kHz=10,67708(3)µs=82/7.68MHz et Tu=16.66(6)µs=128/7.68MHz, et 6 symboles complets avec CP7_60kHz=10,026041 (6)µs=77/7.68MHz et Tu=16.66(6)µs=128/7.68MHz ;
v) demi-slot comportant 1 symboles complet avec CP8_60kHz=11,458(3)µs=88/7.68MHz et Tu=16.66(6)µs=128/7.68MHz, et 6 symboles complets avec CP9_60kHz=9,8958(3)µs=76/7.68MHz et Tu=16.66(6)µs=128/7.68MHz ;
vi) demi-slot comportant 1 symboles complet avec CP10_60kHz=14,58(3)µs=112/7.68MHz et Tu=16.66(6)µs=128/7.68MHz, et 6 symboles complets avec CP11_60kHz=9,375µs=72/7.68MHz et Tu=16.66(6)µs=128/7.68MHz ;
pour une numérologie 7.5 kHz :
i) demi-slot comportant 5 symboles complets avec CP2_7kHz5=66,6(6)µs=512/7.68MHz et Tu=133,3(3)µs=1024/7.68MHz, et 2 symboles complets avec CP3_7kHz5=116,6(6)µs=896/7.68MHz et Tu 133,3(3)µs=1024/7.68MHz ;
ii) demi-slot comportant 4 symboles complets avec CP3_7kHz5=116,6(6)µs=896/7.68MHz et Tu=133,3(3)µs=1024/7.68MHz, et 3 symboles complets avec CP1_7kHz5=33,3(3)µs=256/7.68MHz et Tu=133,3(3)µs=1024/7.68MHz ;
iii) demi-slot comportant 1 symbole complet avec CP4_7kHz5=82,291(6)µs=632/7.68MHz et Tu=133,3(3)µs=1024/7.68MHz, et 6 symboles complets avec CP5_7kHz5=80,7291(6)µs=620/7.68MHz et Tu=133,3(3)µs=1024/7.68MHz ;
iv) demi-slot comportant 1 symbole complet avec CP6_7kHz5=85,41(6)µs=656/7.68MHz Tu=133.3(3)µs=1024/7.68MHz, et 6 symboles complets avec CP7_7kHz5=80,208(3)µs=616/7.68MHz et Tu=133.3(3)µs ;
v) demi-slot comportant 1 symbole complet avec CP8_7kHz5=91,6(6)µs=704/7.68MHz et Tu=133.3(3)µs=1024/7.68MHz, et 6 symboles complets avec CP9_7kHz5=79,1(6)µs=608/7.68MHz et Tu=133.3(3)µs=1024/7.68MHz ;
vi) demi-slot comportant 1 symbole complet avec CP10_7kHz5=116,6(6)µs=896/7.68MHz et Tu=133,3(3)µs=1024/7.68MHz, et 6 symboles complets avec CP11_7kHz5=75µs=576/7.68MHz et Tu=133,3(3)µs=1024/7.68MHz.

4. Procédé de réception de trames radio (302), dans un module électronique de réception radio (20), comprenant les étapes suivantes :
- réception de trames radio comprenant des symboles OFDM, chaque symbole OFDM comportant un symbole OFDM utile généré conformément à la norme 5G NR et chaque symbole OFDM utile est précédé d'un préfixe, respectivement suivi d'un suffixe, cyclique répétant une partie dudit symbole OFDM utile ;
- pour chaque symbole OFDM, détermination d'un symbole OFDM utile en fonction dudit symbole OFDM et de son préfixe, respectivement suffixe ;
- pour un espacement Δf quelconque entre sous-porteuses fréquentielles préalablement sélectionné entre plusieurs espacements, une fréquence déterminée d'échantillonnage et une bande fréquentielle d'émission déterminée, tels que prescrits par la norme 3GPP 5G NR et définissant une configuration de réception courante, transformation de Fourier inverse desdits symboles OFDM utiles conformément à la norme 3GPP 5G NR ;
ledit procédé de réception étant **caractérisé en ce que** le nombre total de symboles OFDM utiles dans un demi-slot radio associé à la trame radio est égal au nombre prescrit par la norme 3GPP 5G NR pour ladite configuration et **en ce qu'**une durée du demi-slot radio est augmentée de manière à pouvoir accommoder ledit nombre de symboles OFDM utiles tout en augmentant également la taille des préfixes, respectivement des suffixes, cycliques ajoutés aux symboles OFDM utiles par rapport à la taille des préfixes, respectivement des suffixes, prescrites par ladite norme 3GPP 5G NR pour ladite configuration.

5. Procédé de réception de trames radio (302) selon la revendication 4, selon lequel la durée du demi-slot radio est 1.5 fois plus longue que la durée du demi-slot radio prescrite par ladite norme 3GPP 5G NR pour ladite configuration.

6. Procédé de réception de trames radio selon la revendication 5, dans lequel un format de constitution d'un demi-slot radio est sélectionné parmi l'un des formats suivants , où un symbole complet est un symbole OFDM utile augmenté d'un préfixe cyclique, respectivement d'un suffixe cyclique :
pour une numérologie de 15 kHz :
i) demi-slot comportant 5 symboles complets avec un préfixe cyclique, respectivement un suffixe cyclique, de durée CP2_15kHz=33,3(3)µs=256/7.68MHz et un symbole OFDM utile de durée Tu=66,6(6)µs=512/7.68MHz, et 2 symboles complets avec CP3_15kHz=58,3(3)µs=448/7.68MHz et Tu=66.6(6)µs=512/7.68MHz ;
ii) demi-slot comportant 4 symboles complets avec CP3_15kHz=58,3(3)µs=448/7.68MHz et Tu=66.6(6)µs=512/7.68MHz, et 3 symboles avec CP1_15kHz=16,6(6)µs=128/7.68MHz et Tu=66.6(6)µs=512/7.68MHz ;
iii) demi-slot comportant 1 symbole complet avec CP4_15kHz=41,1458(3)µs=316/7.68MHz et Tu=66.6(6)µs=512/7.68MHz, et 6 symboles complets avec CP5_15kHz=40,36458(3)µs=310/7.68MHz et Tu=66.6(6)µs=512/7.68MHz ;
iv) demi-slot comportant 1 symbole complet avec CP6_15kHz=42,708(3)µs=328/7.68MHz et Tu=66.6(6)µs=512/7.68MHz, et 6 symboles complets avec CP7_15kHz=40,1041(6)µs=308/7.68MHz et Tu=66.6(6)µs=512/7.68MHz ;
v) demi-slot comportant 1 symbole complet avec CP8_15kHz=45,8(3)µs=352/7.68MHz et Tu=66.6(6)µs=512/7.68MHz, et 6 symboles complets avec CP9_15kHz=39,58(3)µs=304/7.68MHz et Tu=66.6(6)µs=512/7.68MHz ;
vi) demi-slot comportant 1 symbole complet avec CP10_15kHz=58,3(3)µs=448/7.68MHz et Tu=66.6(6)µs=512/7.68MHz, et 6 symboles complets avec CP11_15kHz=37,5µs=288/7.68MHz et Tu=66.6(6)µs=512/7.68MHz ;
pour une numérologie à 30 kHz :
i) demi-slot comportant 5 symboles avec CP2_30kHz=16,6(6)µs=128/7.68MHz et Tu=33,3(3)µs=256/7.68MHz, et 2 symboles complets avec CP3_30kHz=29,1(6)µs=224/7.68MHz et Tu=33.3(3)µs=256/7.68MHz ;
ii) demi-slot comportant 4 symboles avec CP3_30kHz=29,1 (6)µs=224/7.68MHz et Tu=33.3(3)µs=256/7.68MHz, et 3 symboles complets avec CP1_30kHz=8,3(3)µs=64/7.68MHz et Tu=33,3(3)µs=256/7.68MHz ;
iii) demi-slot comportant 1 symbole complet avec CP4_30kHz=20,57291 (6)µs=158/7.68MHz et Tu=33.3(3)µs=256/7.68MHz, et 6 symboles complets avec CP5_30kHz=20,182291(6)µs=155/7.68MHz et Tu=33.3(3)µs=256/7.68MHz ;
iv) demi-slot comportant 1 symbole complet avec CP6_30kHz=21,3541(6)µs=164/7.68MHz et Tu=33.3(3)µs, et 6 symboles complets avec CP7_30kHz=20,05208(3)µs=154/7.68MHz et Tu=33.3(3)µs ;
v) demi-slot comportant 1 symbole complet avec CP8_30kHz=22,91(6)µs=176/7.68MHz et Tu=33.3(3)µs, et 6 symboles complets CP9_30kHz=19,791(6)µs=152/7.68MHz et Tu=33.3(3)µs ;
vi) demi-slot comportant 1 symbole complet avec CP10_30kHz=29,1(6)µs=224/7.68MHz et Tu=33.3(3)µs, et 6 symboles complets avec CP11_30kHz=18,75µs=144/7.68MHz et Tu=33.3(3)µs ;
pour une numérologie à 60 kHz :
i) demi-slot comportant 5 symboles complets avec CP2_60kHz=8,3(3)µs=64/7.68MHz et Tu=16.6(6)µs=128/7.68MHz, et 2 symboles complets CP3_60kHz=14,58(3)µs=112/7.68MHz et Tu=16.66(6)µs=128/7.68MHz ;
ii) demi-slot comportant 4 symboles complets avec CP3_60kHz=14,58(3)µs=112/7.68MHz et Tu=16.66(6)µs=128/7.68MHz, et 3 symboles complets avec CP1_60kHz=4,1(6)µs=32/7.68MHz et Tu=16.6(6)µs=128/7.68MHz ;
iv) demi-slot comportant 1 symboles complet avec CP6_60kHz=10,67708(3)µs=82/7.68MHz et Tu=16.66(6)µs=128/7.68MHz, et 6 symboles complets avec CP7_60kHz=10,026041 (6)µs=77/7.68MHz et Tu=16.66(6)µs=128/7.68MHz ;
v) demi-slot comportant 1 symboles complet avec CP8_60kHz=11,458(3)µs=88/7.68MHz et Tu=16.66(6)µs=128/7.68MHz, et 6 symboles complets avec CP9_60kHz=9,8958(3)µs=76/7.68MHz et Tu=16.66(6)µs=128/7.68MHz ;
vi) demi-slot comportant 1 symboles complet avec CP10_60kHz=14,58(3)µs=112/7.68MHz et Tu=16.66(6)µs=128/7.68MHz, et 6 symboles complets avec CP11_60kHz=9,375µs=72/7.68MHz et Tu=16.66(6)µs=128/7.68MHz ;
pour une numérologie 7.5 kHz :
i) demi-slot comportant 5 symboles complets avec CP2_7kHz5=66,6(6)µs=512/7.68MHz et Tu=133,3(3)µs=1024/7.68MHz, et 2 symboles complets avec CP3_7kHz5=116,6(6)µ3=896/7.68MHz et Tu 133,3(3)µs=1024/7.68MHz ;
ii) demi-slot comportant 4 symboles complets avec CP3_7kHz5=116,6(6)µs=896/7.68MHz et Tu=133,3(3)µs=1024/7.68MHz, et 3 symboles complets avec CP1_7kHz5=33,3(3)µs=256/7.68MHz et Tu=133,3(3)µs=1024/7.68MHz ;
iii) demi-slot comportant 1 symbole complet avec CP4_7kHz5=82,291 (6)µs=632/7.68MHz et Tu=133,3(3)µs=1024/7.68MHz, et 6 symboles complets avec CP5_7kHz5=80,7291(6)µs=620/7.68MHz et Tu=133,3(3)µs=1024/7.68MHz ;
iv) demi-slot comportant 1 symbole complet avec CP6_7kHz5=85,41(6)µs=656/7.68MHz Tu=133.3(3)µs=1024/7.68MHz, et 6 symboles complets avec CP7_7kHz5=80,208(3)µs=616/7.68MHz et Tu=133.3(3)µs ;
v) demi-slot comportant 1 symbole complet avec CP8_7kHz5=91,6(6)µs=704/7.68MHz et Tu=133.3(3)µs=1024/7.68MHz, et 6 symboles complets avec CP9_7kHz5=79,1(6)µs=608/7.68MHz et Tu=133.3(3)µs=1024/7.68MHz ;
vi) demi-slot comportant 1 symbole complet avec CP10_7kHz5=116,6(6)µs=896/7.68MHz et Tu=133,3(3)µs=1024/7.68MHz, et 6 symboles complets avec CP11_7kHz5=75µs=576/7.68MHz et Tu=133,3(3)µs=1024/7.68MHz.

7. Module électronique d'émission radio (10) adapté pour la mise en œuvre d'un procédé d'émission conforme à l'une quelconque des revendications 1 à 3, et, de préférence, également adapté pour la mise en œuvre d'un procédé d'émission conforme à la norme 3GPP 5G NR.

8. Module électronique de réception radio (20) adapté pour la mise en œ uvre d'un procédé de réception conforme à l'une quelconque des revendications 4 à 6, et, de préférence, également adapté pour la mise en œuvre d'un procédé d'émission conforme à la norme 3GPP 5G NR.

9. Trame radio résultant de la mise en œuvre d'un procédé d'émission conforme à l'une quelconque des revendications 1 à 3.
